# EUROPEAN PATENT APPLICATION

(11) **EP 1 804 431 A1**
(43) Date of publication of application: **04.07.2007**
(21) Application number: 04792831.2
(22) Date of filing: 22.10.2004
(51) Int. Cl.: H04L 12/46

(54) **REPEATER AND NETWORK SYSTEM**

(71) Applicant: MITSUBISHI ELECTRIC CORPORATION, Chiyoda-ku Tokyo 100-8310 (JP)
(72) Inventor: KOBAYASHI, Satoshi MitsubishiElectric Corporation, Chiyoda-ku, Tokyo 1008310 (JP)
(74) Representative: Pfenning, Meinig & Partner GbR
(86) International application number: PCT/JP2004/015689
(87) International publication number: WO 2006/043327

(57) **Abstract**

A packet classification part 39 classifies input packets into a transparent packet, a management packet, etc. The transparent packet is sent to a transmission priority control part 51 through the packet classification part 39 and an output packet sorting part 46. The management packet is sent to a management control part 45 through a packet authentication part 44 and the output packet sorting part 46. After decoding the management packet, the management control part 45 outputs a transmission packet for management communication. The transmission packet for management communication is sent to the transmission priority control part 51 through the packet sorting part 46, a transmission packet authentication processing part 49, and an authentication packet generation part 50. The transmission priority control part 51 transmits the transmission packet for management communication, giving priority to it over the transparent packet.

## Description

### Technical Field

The present invention relates to a network system and a relaying apparatus for relaying a packet between networks.

### Background Art

Conventionally, as a measure to monitor and control an illegal packet caused by virus, worm, etc., an intrusion detection apparatus detects the illegal packet and a firewall, a router, etc. blocks a specific packet. In addition, measures (ex. Patent Document 1) to prevent relaying an illegal packet by specifying an inlet of the illegal packet based on hookup among routers, and measures (ex. Patent Document 2) to monitor and control the illegal packet by a network monitoring apparatus, a traffic monitoring apparatus, and an investigation information collection control apparatus, depending upon importance of a monitoring target host, an amount of traffic, and importance of service in the network are proposed.

Conventionally, there is a problem that when it becomes impossible to continue service of an e-mail etc. because of spread of unexpected illegal packets in LAN (Local Area Network) caused by intrusion of virus, worm, etc., since it is difficult to immediately specify the illegal packet by an intrusion detection apparatus and to block the illegal packet by changing the setup of a firewall or a router, it needs to isolate a large range of the network including the subnetwork where a fault is generated until the generation of illegal packets is subdued by once blocking all the packets by using firewalls and routers formed at connecting nodes for a block level of the LAN, for instance. Furthermore, as a result of the blocking of the network, there is a problem that it also becomes impossible to use a management communication, and to intensively manage and control the equipment from a remote place.

According to the Patent Document 1, it is possible to block an attack at the router which is receiving the attack from the external network through communication between routers, based on data from the router which detected the attack caused by an illegal packet. However, it is on the premise of securing communication required for information interchange between routers. Therefore, in the LAN environment in which an attack generating point may broadly spread in the network, it becomes impossible to secure communication between routers at the moment of the attack occurring. Furthermore, upon trying to apply this method to an existing LAN environment, it is necessary to arrange many routers in order to specify an attack source. Accordingly, a measure having a large effect on the LAN environment and being easily applicable to the existing LAN environment is required.

The Patent Document 2 discloses a measure to detect an illegal entry etc., by continuously monitoring doubtful communications based on characters and situations of monitoring targets. However, upon trying to apply it to a large scale LAN environment, it is necessary to devise communication securing and traffic control, etc. to perform monitoring.
Patent Document 1: Japanese Unexamined Patent Publication No. 2003-333092
Patent Document 2: Japanese Unexamined Patent Publication No. 2002-342276

### Disclosure of the Invention

### Problems to be Solved by the Invention

It is an object of the present invention to easily add a large number of monitoring and controlling points in an existing LAN, to narrow the range of a network to be isolated, and to secure management communication for monitoring and controlling the network and communication between normal subnetworks even when being attacked by an unexpected illegal packet.

### Means to Solve the Problems

According to a network system of the present invention, the network system comprises:
a plurality of relaying apparatuses to relay communication among constructive networks which configure an aggregated network composed of a plurality of networks,
wherein each of the plurality of relaying apparatuses, when receiving a packet communicated in the aggregated network through a constructive network to which a relaying apparatus itself is connected, classifies the packet into at least one of a decoding packet whose content is to be decoded and a transparent packet which is to penetrate inside its own apparatus.

The network system further comprises a management apparatus, arranged in the aggregated network, to transmit a control packet including designation data for designating at least one of the plurality of relaying apparatuses and control data for instructing a designated relaying apparatus designated by the designation data on a predetermined control, to its adjoining relaying apparatus,
wherein, in the plurality of relaying apparatuses, each of relaying apparatuses from a relaying apparatus to receive the control packet sent by the management apparatus to a relaying apparatus adjacent to the designated relaying apparatus, when receiving the control packet, classifies the control packet received into the decoding packet, and distributes the control packet to the designated relaying apparatus based on a decoding result of the control packet which has been classified into the decoding packet.

The management apparatus designates the plurality of relaying apparatuses to be designated relaying apparatuses as designation data, and includes a data request in the control packet, which requests predetermined data from the plurality of designated relaying apparatuses as control data,
each of the plurality of designated relaying apparatuses, when receiving the control packet including the data request, classifies the control packet received into a decoding packet, and transmits a response packet including correspondence data corresponding to the data request, to other relaying apparatus, based on a decoding result of the control packet which has been classified into the decoding packet, and
the other relaying apparatus, when receiving the response packet from each of the plurality of designated relaying apparatuses, generates an integrated packet integrating each response packet, and transmits the integrated packet generated to the management apparatus.

The other relaying apparatus, when receiving the response packet from the designated relaying apparatus, generates the integrated packet including route data indicating a route from the designated relaying apparatus to the other relaying apparatus itself.

The other relaying apparatus, when receiving the response packet from the designated relaying apparatus, stores route data indicating a route from the designated relaying apparatus to the other relaying apparatus itself.

Each of the relaying apparatuses stores predetermined management data, and when a relaying apparatus is newly installed in the constructive network to which the relaying apparatus itself is connected, supplies the predetermined management data to an installed relaying apparatus.

According to a relaying apparatus of the present invention, the relaying apparatus which relays a packet from a first network to a second network, comprises:
a packet classification part to receive the packet from the first network, and to classify a received packet into at least one of a management packet used for managing communication and a transparent packet which penetrates inside its own apparatus;
a transmission part to transmit the transparent packet classified by the packet classification part to the second network; and
a management control part to input the management packet classified by the packet classification part, and to decode the management packet.

The packet classification part receives the packet of a format predetermined from the first network, as the received packet, and
the transmission part, when the packet classification part classifies the received packet into the transparent packet, transmits the transparent packet to the second network without changing the format of the transparent packet being the received packet.

The packet classification part classifies a predetermined packet received from the first network into a monitor packet being a monitoring object, and
the relaying apparatus further includes a monitor packet counter to measure a number of monitor packets classified by the packet classification part.

The management control part analyses the monitor packets classified by the packet classification part.

The relaying apparatus further includes a transparent packet counter to measure a number of transparent packets classified by the packet classification part,
wherein the packet classification part changes classification of the received packet, from the transparent packet to a discard object packet being a discarding object, based on the number of measurement of the transparent packet counter.

The packet classification part, when receiving a discard instruction packet including a discard instruction to instruct to discard a packet, from the first network, classifies a received discard instruction packet into the management packet, and
the management control part makes the packet classification part change classification of the received packet, from the transparent packet to a discard object packet being a discarding object, based on the discard instruction included in the discard instruction packet which has been classified into the management packet.

The packet classification part, when receiving an authentication data added packet, to which authentication data is added, from the first network, classifies a received authentication data added packet into the management packet, and
the relaying apparatus further comprises a packet authentication part to perform authenticating the authentication data added packet which is classified into the management packet by the packet classification part, and when the authenticating is approved, to output an approved authentication data added packet to the management control part.

The management control part generates a transmission packet for management communication which includes predetermined management data based on a decoding result of the management packet, and outputs a generated transmission packet for management communication, and
the transmission part inputs the transmission packet for management communication outputted by the management control part, and transmits an inputted transmission packet for management communication to the second network, giving it higher priority over the transparent packet.

The relaying apparatus further includes a header adding part to input the transmission packet for management communication outputted by the management control part, to add a header including indication data indicating being the transmission packet for management communication to an inputted transmission packet for management communication, and to output it as a header added packet,
wherein the transmission part inputs the header added packet outputted by the header adding part, and transmits an inputted header added packet to the second network, giving it higher priority over the transparent packet.

The relaying apparatus further includes an authentication data adding part to input the transmission packet for management communication outputted by the management control part, to add authentication data to an inputted transmission packet for management communication, and to output it as an authentication data added packet,
wherein the header adding part inputs the authentication data added packet outputted by the authentication data adding part, adds the header including the indication data indicating being the transmission packet for management communication to an inputted authentication data added packet, and outputs it as the header added packet.

The management control part stores a management packet classification condition by which the packet classification part classifies the received packet into the management packet, and notifies a stored management packet classification condition to the packet classification part, and
the packet classification part classifies the received packet into the management packet based on the management packet classification condition notified by the management control part.

The management control part, in a predetermined case, renotifies a predetermined management packet classification condition to the packet classification part, and
the packet classification part, classifies the received packet into the management packet based on the management packet classification condition renotified by the management control part.

The relaying apparatus further includes a management packet counter to measure a number of management packets classified by the packet classification part,
wherein the management control part renotifies the predetermined management packet classification condition to the packet classification part, based on the number of measurement of the management packets measured by the management packet counter.

The packet classification part, when receiving an authentication data added packet to which authentication data is added from the first network, classifies a received authentication data added packet into the management packet,
the relaying apparatus further includes a packet authentication part to authenticate the authentication data added packet which the packet classification part classified into the management packet, and
the management control part renotifies the predetermined management packet classification condition to the packet classification part, based on an authentication result of the management packet by the packet authentication part.

According to a relaying apparatus of the present invention, the relaying apparatus which relays a packet from a first network to a second network, comprises:
a packet classification part to classify a predetermined packet received from the first network into an object packet being an object to add authentication data when malfunction is occurring in the second network;
an authentication data adding part to add the authentication data to the object packet classified by the packet classification part; and
a transmission part to transmit the object packet to which the authentication data adding part added the authentication data, to the second network.

According to a relaying apparatus of the present invention, the relaying apparatus which relays a packet from a first network to a second network, comprises:
a packet classification part, when receiving an authentication data added packet to which authentication data has been added from the first network where malfunction is occurring, to classify a received authentication data added packet into an authentication packet;
a packet authentication part to input and authenticate the authentication packet which the packet classification part classified, and when authentication is approved, to output an approved authentication packet; and
a transmission part to input the authentication packet outputted by the packet authentication part, and to output it to the second network.

The relaying apparatus further comprises a management control part to store a plurality of authentication packet classification conditions for classifying the authentication data added packet received by the packet classification part into the authentication packet, and to notify one of the plurality of authentication packet classification conditions which are stored, to the packet classification part,
wherein the packet classification part classifies the received authentication data added packet into the authentication packet based on an authentication packet classification condition notified by the management control part.

The management control part, in a predetermined case, renotifies a predetermined authentication packet classification condition to the packet classification part, and
the packet classification part classifies a received packet into the authentication packet, based on the authentication packet classification condition renotified by the management control part.

The management control part renotifies the predetermined authentication packet classification condition to the packet classification part, based on an authentication result of the authentication packet by the packet authentication part.

The relaying apparatus further includes an authentication packet counter to measure a number of authentication packets classified by the packet classification part,
wherein the management control part renotifies the predetermined authentication packet classification condition to the packet classification part, based on the number of measurement of the authentication packets measured by the authentication packet counter.

### Effects of the Invention

In virtue of the present invention, it is possible to secure management communication for monitoring and controlling a network and communication between normal subnetworks even when having been attacked by virus or an unexpected illegal packet, and to narrow the range of a network to be isolated even when having been attacked by virus or an unexpected illegal packet.

### Best Mode for Carrying out the Invention

### Embodiment 1

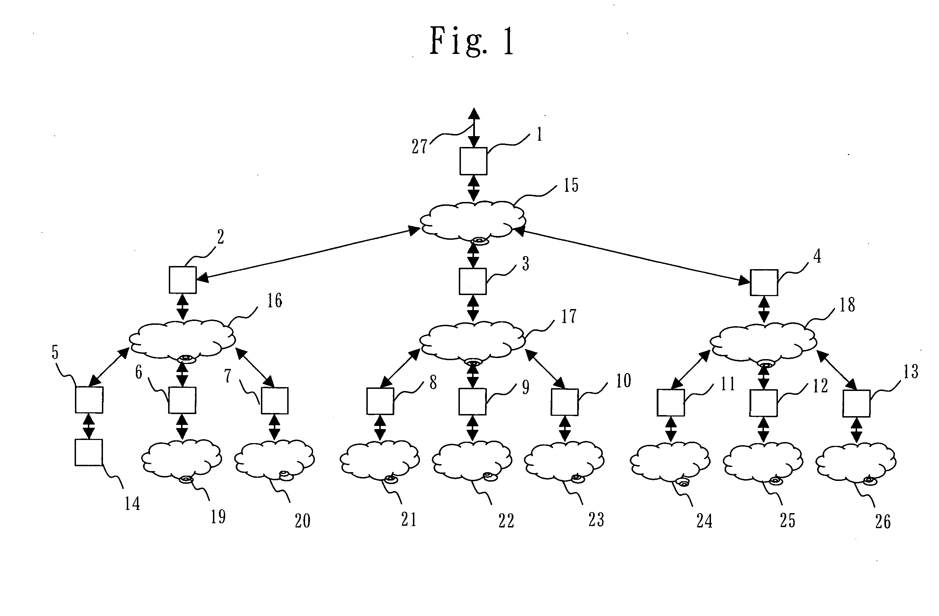

Embodiment 1 will now be explained with reference to Figs. 1 to 11. Fig. 1 shows a network configuration of a network system 1000 described in Embodiment 1. The whole network is composed of Local Area Networks (LAN) which perform communications by IP packets. The network system 1000 is composed of LAN networks 15 to 18 and subnetworks 19 to 26. These LAN networks 15 to 18 and the subnetworks 19 to 26 are constructive networks which configure the network system of Fig. 1. These constructive networks form a hierarchical structure, in which the LAN network 15 is the first layer, the LAN networks 16 to 18 are the second layers, and the subnetworks 19 to 26 are the third layers.

The network system 1000 includes LAN monitoring/controlling apparatuses 1 to 13 (an example of a relaying apparatus) and a management apparatus 14. The LAN monitoring/controlling apparatuses 1 to 13 relay packets between networks and monitor the networks to which the apparatus itself is connected. The LAN monitoring/controlling apparatuses 1 to 13 are arranged so that they may form a layered structure according to the LAN configuration. The management apparatus 14 monitors and controls the LAN monitoring/controlling apparatuses 1 to 13, etc. The network from which the LAN monitoring/controlling apparatus 1, etc. inputs a packet is the first network, and the network to which the LAN monitoring/controlling apparatus 1, etc. outputs a packet is the second network.

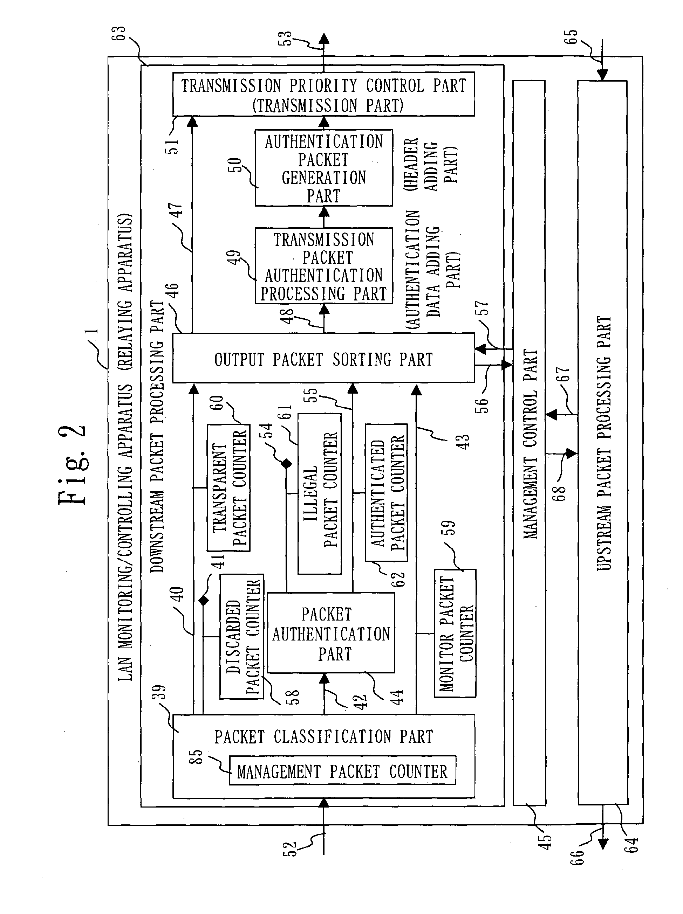

Fig. 2 is a block diagram showing an example of the LAN monitoring/controlling apparatus 1. The LAN monitoring/controlling apparatuses 2 to 13 also have the same configurations. Since details of the configuration of the LAN monitoring/controlling apparatus 1 will be explained in Embodiment 3, only the outline of the configuration is described in Embodiment 1.

The LAN monitoring/controlling apparatus 1 includes a downstream packet processing part 63, a management control part 45, and an upstream packet processing part 64.

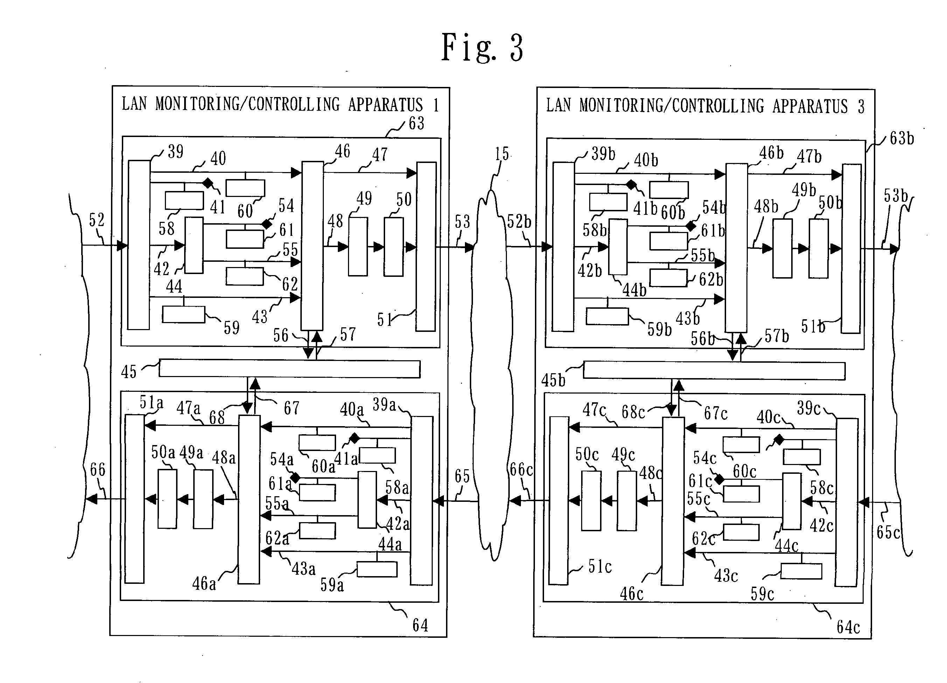

The downstream packet processing part 63 inputs a downstream packet input 52, and outputs a downstream packet output 53. The upstream packet processing part 64 inputs an upstream packet input 65, and outputs an upstream packet output 66. The downstream packet processing part 63 is paired with the upstream packet processing part 64. Only the internal configuration of the downstream packet processing part 63 is shown in Fig 2. The internal configuration of the upstream packet processing part 64 is the same as that of the downstream packet processing part 63. As to the internal configuration of the upstream packet processing part 64, it is structured to replace the downstream packet input 52 of the downstream packet processing part 63 with the upstream packet input 65, and replace the downstream packet output 53 of the downstream packet processing part 63 with the upstream packet output 66. The internal configuration of the upstream packet processing part 64 is shown in Fig. 3.

The configuration of the LAN monitoring/controlling apparatus 1 will now be explained.
(1) A packet classification part 39 classifies received packets into a transparent packet, a discard packet, an authentication packet, a management packet, and a monitor packet.
(2) A count part, such as a management packet counter 85, a transparent packet counter 60, a discarded packet counter 58, an illegal packet counter 61, an authenticated packet counter 62, and a monitor packet counter 59, accumulates (measures) the number of packets classified respectively by the packet classification part 39.
(3) A packet authentication part 44 authenticates an authentication packet and a management packet, and checks the validity of the packet.
(4) An output packet sorting part 46 inputs a packet from the packet classification part 39, and sorts it into an output destination.
(4) A transmission packet authentication processing part 49 adds authentication data to a transmission packet.
(5) An authentication packet generation part 50 adds a header to a transmission packet, by which the transmission packet can be classified as an authentication packet or a management packet.
(6) A transmission priority control part 51 (an example of a transmission part) transmits packets, giving the first priority to a management packet, the second priority to an authentication packet, and the third priority to a transparent packet.
(7) The management control part 45 decodes a management packet, performs sending/receiving and processing of management communication, and manages and controls the whole LAN monitoring/controlling apparatus 1. Moreover, the management control part 45 stores a management packet classification condition and an authentication packet classification condition. The configuration of the LAN monitoring/controlling apparatus 1 has been explained in the above, and details will be described in Embodiment 3.

In the network system 1000, the management apparatus 14 receives monitoring data from the LAN monitoring/controlling apparatuses 1 to 13 and transmits LAN control data to the LAN monitoring/controlling apparatuses 1 to 13 in order to monitor and control the LAN.

The LAN networks 15 to 18 are composed of communication facilities, such as routers, switches, and hubs.

The subnetworks 19 to 26 include network equipment, such as a switch and a hub, and a terminal device, such as a personal computer and a server. 27 denotes an interface with an external network, and is positioned where a firewall and an intrusion detection apparatus are arranged conventionally.

Next, operations will be explained. First, a packet relay operation at the time of LAN normal operation (in the case of no malfunction occurring in the network system 1000) will be explained. Each of the LAN monitoring/controlling apparatus 1 to 13 operates as a repeater, classifying a received packet into a transparent packet by the packet classification part 39, and transmitting it to the opposite network to which the apparatus is connected, through the transmission priority control part 51. That is, the LAN monitoring/controlling apparatuses 1 to 13 transmit packets received from the network (first network) to the opposite network (second network) without changing formats of them. It will be explained based on the configuration shown in Fig. 2.
(1) The packet classification part 39 receives a packet of a predetermined format as a received packet from the network (the first network), and classifies the received packet into a transparent packet. When classifying the received packet into a transparent packet, the packet classification part 39 does not change the format of the received packet at all. The packet classification part 39 outputs the transparent packet to the output packet sorting part 46.
(2) The output packet sorting part 46 inputs the transparent packet from the packet classification part 39 and outputs it to the transmission priority control part 51 without changing the format.
(3) The transmission priority control part 51 inputs the transparent packet from the output packet sorting part 46, and transmits it to the opposite network (the second network) without changing the format of the received packet. Therefore, the LAN monitoring/controlling apparatuses 1 to 13 appear transparent to other apparatus in the LAN (inside the network system 1000). When transmitting the transparent packet, the transmission priority control part 51 amplifies a formation signal forming the transparent packet, to output.

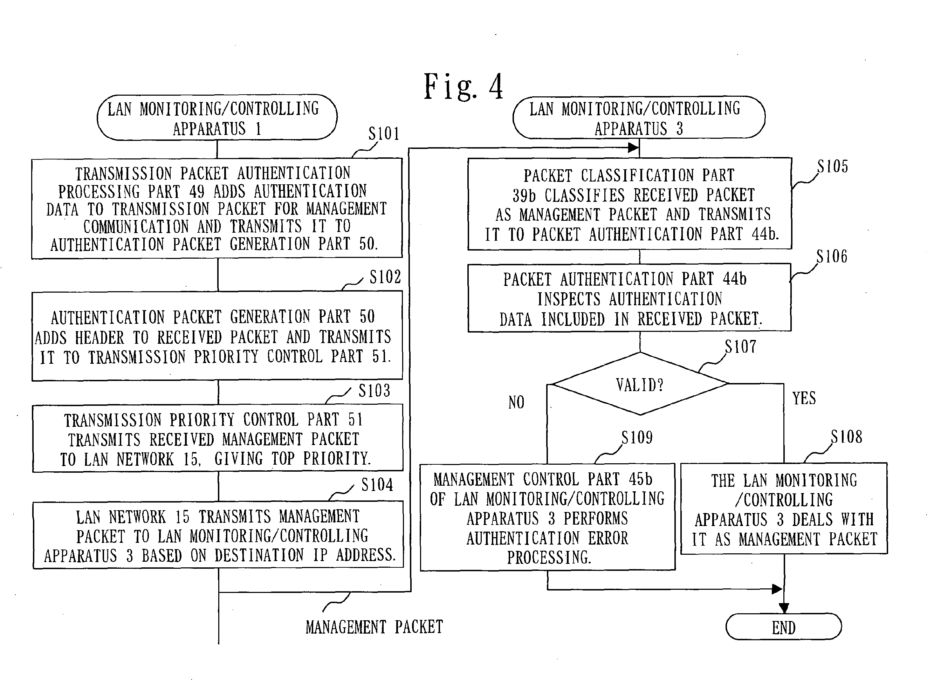

Next, sending and receiving operations of a "management packet" performed between the LAN monitoring/controlling apparatuses 1 to 13 will be explained in reference to Figs. 3 and 4. The "management packet" is transmitted to a predetermined LAN monitoring/controlling apparatus from the management apparatus 14. Alternatively, the "management packet" is transmitted from a LAN monitoring/controlling apparatus to another LAN monitoring/controlling apparatus or to the management apparatus 14. The case of transmitting "management packet" to the LAN monitoring/controlling apparatus 3 from the LAN monitoring/controlling apparatus 1 in the network system 1000 of Fig. 1 will be explained below as an example.

Fig. 3 is a block diagram showing connection between the LAN monitoring/controlling apparatus 1 and the LAN monitoring/controlling apparatus 3. For making a distinction, "a" is given to structure elements of the upstream packet processing part 64 of the LAN monitoring/controlling apparatus 1. "b" is given to a downstream packet processing part 63b of the LAN monitoring/controlling apparatus 3, and "c" is given to an upstream packet processing part 64c of the LAN monitoring/controlling apparatus 3. Structure elements having the same number indicate the same elements.

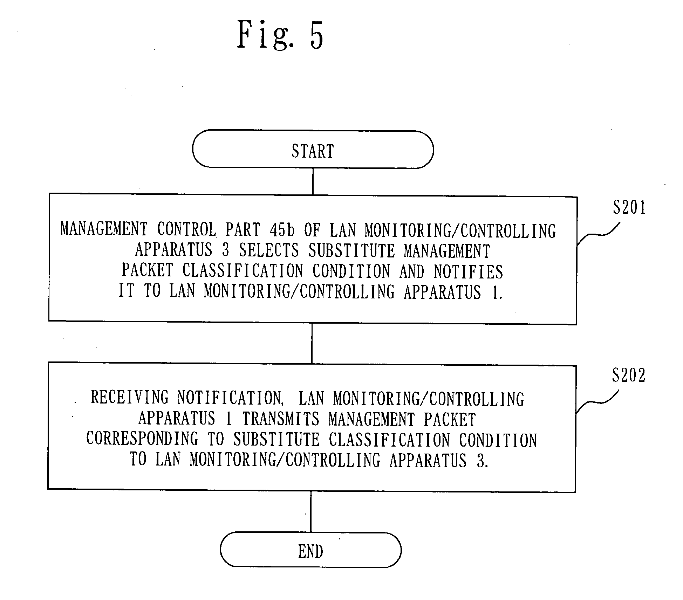

Fig. 4 is a flowchart explaining a process of transmitting "management packet" from the LAN monitoring/controlling apparatus 1 to the LAN monitoring/controlling apparatus 3.
(1) The LAN monitoring/controlling apparatus 1 adds authentication data to a transmission packet for management communication by the transmission packet authentication processing part 49, and transmits it to the authentication packet generation part 50 (S101).
(2) The authentication packet generation part 50 adds a header to the packet received from the transmission packet authentication processing part 49, by which the received packet can be classified as a management packet by a packet classification part 39b of the LAN monitoring/controlling apparatus 3, and transmits it to the transmission priority control part 51 (S102).
(3) The transmission priority control part 51, giving the top priority, transmits the packet to the LAN network 15 (the second network) as the downstream packet output 53. In this case, even if there is a transparent packet awaiting to be transmitted, the transmission priority control part 51 transmits the management packet to the LAN network 15, leaving behind the awaiting packet (S103).
(4) The LAN network 15 transmits the management packet to the LAN monitoring/controlling apparatus 3 based on a destination IP address (S104).
(5) The LAN monitoring/controlling apparatus 3 classifies the packet received from a downstream packet input 52b into a management packet by the packet classification part 39 and passes it to a packet authentication part 44b (S105). The packet classification part 39 is notified of a management packet classification condition beforehand by the management control part 45. A plurality of management packet classification conditions is stored in the management control part 45. The management control part 45 notifies the packet classification part 39 of a predetermined management packet classification condition. The packet classification part 39 classifies the received packet into a management packet based on the notified management packet classification condition. In addition, in a predetermined case, the management control part 45 renotifies the packet classification part 39 of the management packet classification condition. The packet classification part 39 performs classification based on the renotified management packet classification condition.
(6) The packet authentication part 44b inspects the validity of the received management packet based on the authentication data included in the packet concerned (S106, S107). When the validity is verified as a result of the inspection, the LAN monitoring/controlling apparatus 3 deals with the packet concerned as a management packet from the LAN monitoring/controlling apparatus 1 (S108). Specifically, a management control part 45b inputs the packet (an example of a decoding packet) through an output packet sorting part 46b and decodes it. On the other hand, when the authentication is not approved in S107, it goes to step S 109 of Fig. 4. Details will be explained with reference to Fig. 5.

As to the "authentication condition" and the "management packet classification condition" used in the above communication, the LAN monitoring/controlling apparatus 1 and the LAN monitoring/controlling apparatus 3 share them beforehand. These conditions are stored in the management control part 45, the management control part 45b, etc. For example, an authentication key and an authentication algorithm are shared herein as the "authentication condition". Moreover, the management packet classification condition for a management packet is defined by combination of values of a plurality of fields, such as an IP address, a protocol number, and a port number being structure elements of a packet header.
In addition, two or more kinds of management packet classification conditions for a management packet are shared by the LAN monitoring/controlling apparatuses 1 and 3.
However, in order to enable the LAN network 15 to transfer a packet, an IP address to be distributed to the LAN network 17 is designated as a destination IP address. On the contrary, when transmitting a management packet to the LAN monitoring/controlling apparatus 1 from the LAN monitoring/controlling apparatus 3, an IP address to be distributed to the external network interface 27 is designated as a destination IP address.

The share range of the "authentication condition" and the "management packet classification condition" is defined for each interface connected to the LAN networks 15 to 18 of the LAN monitoring/controlling apparatuses 1 to 13. For example, the LAN monitoring/controlling apparatuses 1 to 4 are connected to the LAN network 15, and they mutually perform direct management communication. For this reason, peculiar "authentication condition" and "management packet classification condition" are mutually shared one-to-one by the LAN monitoring/controlling apparatuses 1 to 4. On the other hand, the LAN monitoring/controlling apparatus 2 is also connected to the LAN network 16 and performs management communication with the LAN monitoring/controlling apparatuses 5 to 7. Therefore, the LAN monitoring/controlling apparatus 2 shares peculiar "authentication condition" and "management packet classification condition" one-to-one with the LAN monitoring/controlling apparatuses 5 to 7. Since the LAN monitoring/controlling apparatus 5 is also connected to the management apparatus 14, the LAN monitoring/controlling apparatus 5 and the management apparatus 14 share peculiar authentication condition and management packet classification condition. Since the LAN monitoring/controlling apparatuses 6 and 7 have no party to share the authentication condition and the management packet classification condition at the opposite side of the LAN network 16, they monitor the subnetworks 19 and 20 as terminal apparatuses.

As stated above, each of the LAN monitoring/controlling apparatuses 1 to 13 shares the "authentication condition" and the "management packet classification condition" depending upon each party to directly send and receive management communication. However, it is also acceptable to define the authentication condition and the management packet classification condition for each of the LAN networks 15 to 18, and then the LAN monitoring/controlling apparatuses 1 to 13, which are connected to the LAN networks 15 to 18, share a common authentication condition and a common management packet classification condition. For example, the LAN monitoring/controlling apparatuses 1 to 4 connected to the LAN network 15 share a common authentication condition and a common management packet classification condition. Then, the LAN monitoring/controlling apparatuses 2, 5, 6, and 7 connected to the LAN network 16 share other authentication condition and other management packet classification condition.

Next, operations in the case of an authentication error occurring because of an attack etc. in the process of sending and receiving management packet will be explained with reference to Fig. 5. Fig. 5 shows processing of S 109 in Fig. 4.
(1) For example, when a management packet received by the LAN monitoring/controlling apparatus 3 is regarded an authentication error by an authentication performed by the packet authentication part 44b, the management control part 45b of the LAN monitoring/controlling apparatus 3 selects a substitute "management packet classification condition" from a plurality of currently shared "management packet classification conditions", and notifies the LAN monitoring/controlling apparatus 1 of the substitute management packet classification condition (S201).
(2) The management control part 45 of the LAN monitoring/controlling apparatus 1 which received the above notification controls henceforth to transmit a management packet corresponding to the substitute classification condition (S202).
(3) The LAN monitoring/controlling apparatus 3 changes the "management packet classification condition" which has been used into the classification condition of transparent packets, and simultaneously adds the management packet classification condition, having been changed to the classification condition of transparent packets, to the classification condition of monitor packets, monitors a corresponding received packet, and changes the received packet into a discard packet if necessary. On the other hand, the packet regarded as an authentication error is relayed to the LAN network 17 as a transparent packet or discarded as a discard packet. As to which processing is to be performed, it is set beforehand in the LAN monitoring/controlling apparatus 3.

In the above changing procedure of the management packet classification condition, shortly after detecting the authentication error, the management packet classification condition is changed. However, it is also acceptable to count the number of times of generating an authentication error, and to change the "management packet classification condition" when the number of times of the authentication error generation in a predetermined period of time exceeds a predetermined times. Specifically, the number of the management packets regarded as authentication errors is counted using the illegal packet counter 61. When the counter number in a predetermined period exceeds a specified value, the management control part 45 renotifies its own management packet classification part 39 of the management packet classification condition, and notifies it to the apparatus of the party. Thereby, it is possible to react to the environment in which an authentication error may be generated because of the reason except for an attack, such as network quality deterioration.

Furthermore, a traffic amount of the management packet is shared in advance between the LAN monitoring/controlling apparatus 1 and the LAN monitoring/controlling apparatus 3, and when detecting that the number of the management packets received in a predetermined period of time has exceeded a specified value by using the management packet counter 85, it is regarded that an unexpected attack has occurred. For example, the management control part 45 of the LAN monitoring/controlling apparatus 1 renotifies its own packet classification part 39 of the management packet classification condition, and notifies it to the LAN monitoring/controlling apparatus 3.

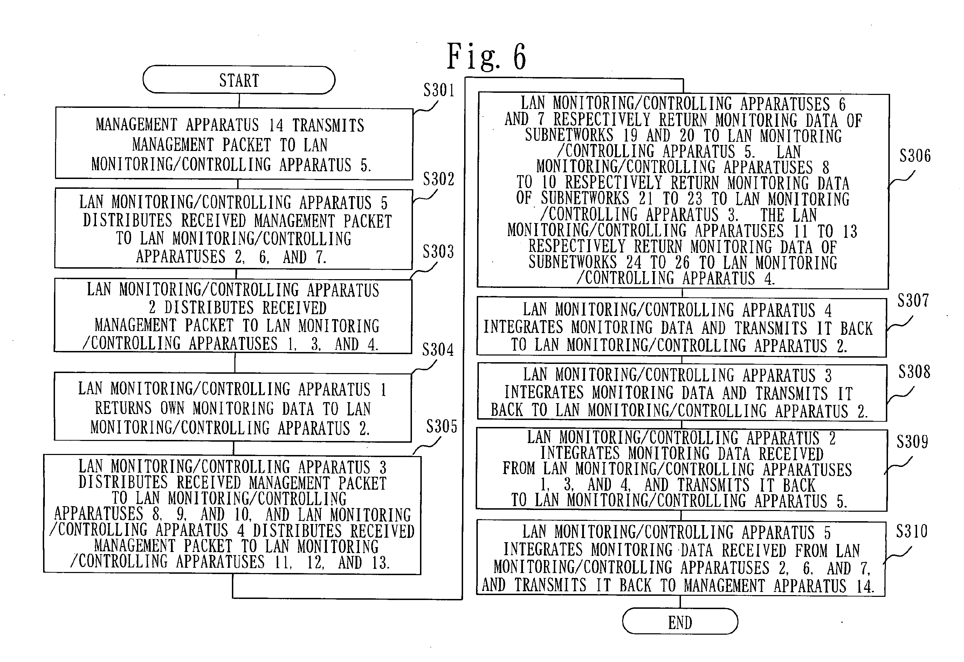

Next, operations in the case of the management apparatus 14 collecting monitoring data of all the LAN monitoring/controlling apparatuses 1 to 13 will be explained with reference to Fig. 6. Fig. 6 is a flowchart showing the operations of the management apparatus 14 collecting the monitoring data of all the LAN monitoring/controlling apparatuses 1 to 13.
(1) The management apparatus 14 transmits a management packet (an example of a control packet) including a monitoring data transmission request (an example of a data request) to the LAN monitoring/controlling apparatus 5 (S301).
(2) Receiving this management packet, the LAN monitoring/controlling apparatus 5 distributes the management packet from the management apparatus 14 to the LAN monitoring/controlling apparatuses 2, 6, and 7 connected through the LAN network 16, and waits for monitoring data return (an example of a response packet) from the LAN monitoring/controlling apparatuses 2, 6, and 7 (S302).
(3) The LAN monitoring/controlling apparatus 2 distributes the management packet received from the LAN monitoring/controlling apparatus 5 to the LAN monitoring/controlling apparatuses 1, 3, and 4 connected through the LAN network 15, and waits for monitoring data return from the LAN monitoring/controlling apparatuses 1, 3, and 4 (S303).
(4) The LAN monitoring/controlling apparatus 1 does not transmit the management packet to the external network interface 27, but returns its own monitoring data (an example of correspondence data) to the LAN monitoring/controlling apparatus 2 (S304).
(5) The LAN monitoring/controlling apparatuses 3 and 4 respectively transmit the management packet to the LAN monitoring/controlling apparatuses 8 to 13 which are directly connected as a lower layer, and wait for monitoring data return from these apparatuses (S305).
(6) The LAN monitoring/controlling apparatuses 6 to 13 have no lower level LAN monitoring/controlling apparatuses. For this reason, the LAN monitoring/controlling apparatuses 6 and 7 return the monitoring data of the subnetworks 19 and 20 to the LAN monitoring/controlling apparatus 5. The LAN monitoring/controlling apparatuses 8 to 10 return the monitoring data of the subnetworks 21 to 23 to the LAN monitoring/controlling apparatus 3. The LAN monitoring/controlling apparatuses 11 to 13 return the monitoring data of the subnetworks 24 to 26 to the LAN monitoring/controlling apparatus 4 (S306).
(7) The LAN monitoring/controlling apparatus 4 generates an integrated packet by integrating the monitoring data sent back from the LAN monitoring/controlling apparatuses 11 to 13 with its own monitoring data, and transmits back the integrated packet to the LAN monitoring/controlling apparatus 2 (S307).
(8) The LAN monitoring/controlling apparatus 3 integrates the monitoring data sent back from the LAN monitoring/controlling apparatuses 8 to 10 with its own monitoring data, and transmits it back to the LAN monitoring/controlling apparatus 2 (S308).
(9) The LAN monitoring/controlling apparatus 2 which received the monitoring data from the LAN monitoring/controlling apparatuses 1, 3, and 4 integrates the received monitoring data with its own monitoring data, and transmits it back to the LAN monitoring/controlling apparatus 5 (S309).
(10) The LAN monitoring/controlling apparatus 5 integrates the monitoring data received from the LAN monitoring/controlling apparatuses 2, 6, and 7 with its own monitoring data, and transmits it back to the management apparatus 14 (S310).

Since each of the LAN monitoring/controlling apparatuses 1 to 13 attaches return route data (route data) to the response to the monitoring data transmission request sent to all the LAN monitoring/controlling apparatuses 1 to 13 from the management apparatus 14, the management apparatus 14 exactly understands the number and the connection relation of the LAN monitoring/controlling apparatuses. By this procedure, the management apparatus 14 obtains data required for designating a transmission route of the management packet while exactly understanding increase/decrease and malfunction of the LAN monitoring/controlling apparatus at any time.

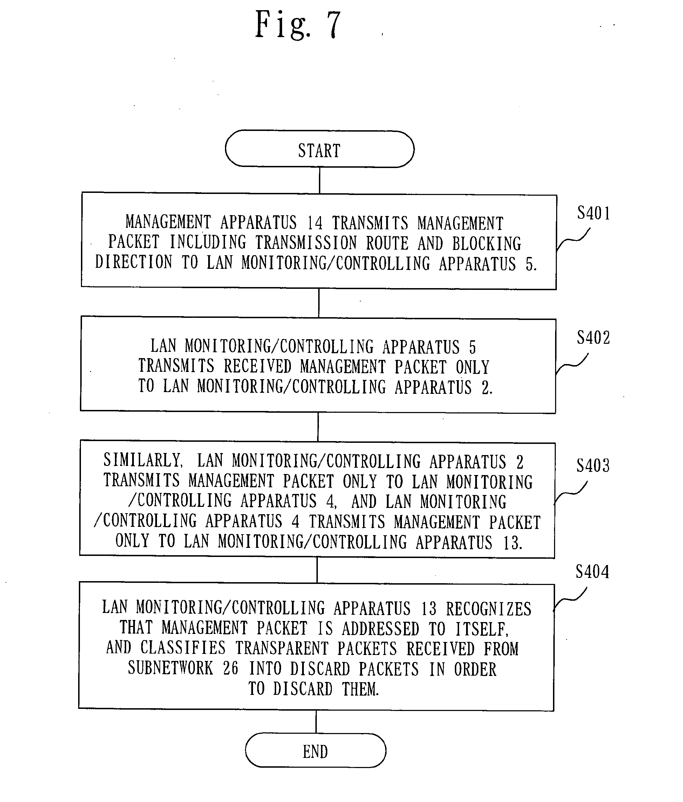

Next, with reference to Fig. 7, operations at the time of the management apparatus 14 finding malfunction of the subnetwork 26 based on the collected monitoring data and blocking the subnetwork 26 from the LAN network 18 will be explained. Fig. 7 is a flowchart showing the blocking of the subnetwork 26. It is assumed in this example that the malfunction of the subnetwork 26 is unusual increase in traffic etc., and features of the packet being the cause of the attack cannot be specified.
(1) The management apparatus 14 transmits a management packet (an example of a control packet) including a blocking instruction (an example of control data) of the subnetwork 26 to the LAN monitoring/controlling apparatus 13, to the LAN monitoring/controlling apparatus 5. In this case, the management apparatus 14 includes data on a transmission route of the management packet, in the management packet. This transmission route is data indicating the next transmission destination of the management packet, and designates the LAN monitoring/controlling apparatuses in the order of 2, 4, and 13 (an example of designation data) (S401).
(2) The LAN monitoring/controlling apparatus 5 which receives the management packet designated as the above recognizes the LAN monitoring/controlling apparatus 2 as the next transmission destination based on the route data in the management packet, and transmits the management packet only to the LAN monitoring/controlling apparatus 2 (S402).
(3) Similarly, the LAN monitoring/controlling apparatus 2 transmits the management packet only to the LAN monitoring/controlling apparatus 4. Similarly, the LAN monitoring/controlling apparatus 4 transmits the management packet only to the LAN monitoring/controlling apparatus 13 based on the route data in the received management packet (S403).
(4) The LAN monitoring/controlling apparatus 13 recognizes that the management packet is addressed to the apparatus 13 itself, and blocks the subnetwork 26 from the LAN network 18 by classifying all the transparent packets received from the subnetwork 26 into discard packets by the packet classification part 39 in accordance with the blocking instruction from the management apparatus 14 (S404).

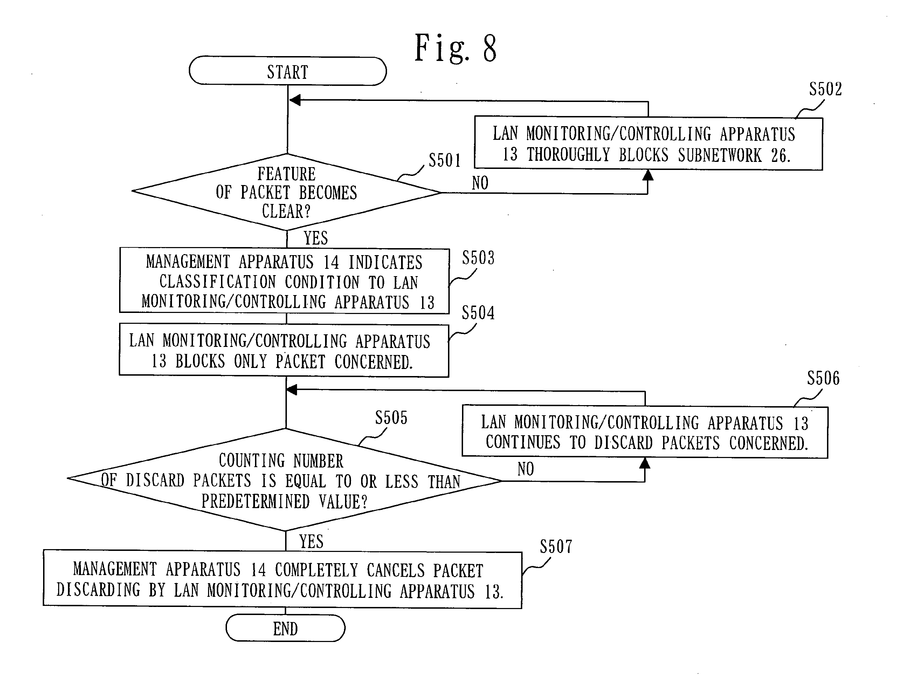

Next, the case of a partial restoration and a complete restoration upon the blocking will be explained with reference to Fig. 8.
(1) After blocking of the subnetwork 26, when the feature of the causing packet becomes clear (S501, S502), the management apparatus 14 indicates a classification condition for the causing packet, to the LAN monitoring/controlling apparatus 13 (S503). By classifying only the packet concerned into a discard packet by the packet classification part 39 based on the indication of the classification condition, the subnetwork 26 is partially restored to be the LAN network 18. (S504)
(2) Furthermore, the management apparatus 14 monitors the receiving number of discard packets, using the discarded packet counter 58 of the LAN monitoring/controlling apparatus 13 (S505, S506). By this monitoring, when measures against the malfunction in the subnetwork 26 has been completed and it is confirmed that generation of the unusual packet has been suppressed (S507), all the discard conditions of the packet classification part 39 in the LAN monitoring/controlling apparatus 13 are canceled.

Even when packets transmitted to the LAN network 18 from the subnetwork 26 increase rapidly by the cancellation of the blocking, the LAN monitoring/controlling apparatus 13 secures the management communication between the LAN monitoring/controlling apparatuses 13 and 4 by giving priority to the transmission of the management packet by the transmission priority control part 51.

Furthermore, if malfunction occurs in the subnetworks 24 to 26, when the subnetworks 24 to 26 are blocked from the LAN network 18, an instruction to block by the LAN monitoring/controlling apparatuses 11 to 13 is sent to the LAN monitoring/controlling apparatus 4 from the management apparatus 14. The LAN monitoring/controlling apparatus 4 which received this instruction distributes the management packet including the instruction to block the subnetworks 24 to 26, to the LAN monitoring/controlling apparatuses 11 to 13.

Moreover, when blocking the subnetworks 21 to 26, the management apparatus 14 transmits a management packet including an instruction to block by the LAN monitoring/controlling apparatuses 8 to 13, to the LAN monitoring/controlling apparatus 2. The LAN monitoring/controlling apparatus 2 distributes the management packet to the LAN monitoring/controlling apparatuses 3 and 4. The LAN monitoring/controlling apparatus 3 distributes the management packet to the LAN monitoring/controlling apparatuses 8 to 10. The LAN monitoring/controlling apparatus 4 distributes the management packet to the LAN monitoring/controlling apparatuses 11 to 13. The LAN monitoring/controlling apparatuses 8 to 13 which received the management packet block the subnetworks 21 to 26 from the LAN networks 17 and 18 by classifying transparent packets from the subnetworks 21 to 26 into discard packets by the packet classification part 39.

In the above method, when distributing a management packet by designating a transmission destination, the management apparatus 14 designates the transmission route to the transmission destination. However, it is not limited to this, and an equivalent effect can be acquired by the following:
(1) Based on the return for the monitoring data transmission request to be transmitted to all the LAN monitoring/controlling apparatuses 1 to 13 from the management apparatus 14, each of the LAN monitoring/controlling apparatuses 1 to 13 stores the transmission source (an example of route data) of the return.
(2) When receiving the management packet (control packet) whose transmission destination is designated (designation data) from the management apparatus 14, the LAN monitoring/controlling apparatuses 1 to 13 to be the transfer destination is determined by conversely following the stored transmission source data. The route data stored by each of the LAN monitoring/controlling apparatuses 1 to 13 is updated every time a return for the monitoring data transmission request transmitted from the management apparatus 14 is received. By this, it is possible to react to a change of the apparatus structure caused by a connection point change of the management apparatus 14, an extension of the LAN monitoring/controlling apparatuses 1 to 13, etc.

Next, autonomous blocking by the LAN monitoring/controlling apparatuses 1 to 13 will be explained. The management control part 45 of the management apparatus 14 instructs each of the LAN monitoring/controlling apparatuses 1 to 13 beforehand to monitor a traffic amount of a transparent packet by using the transparent packet counter 60. Receiving the instruction, the management control part 45 of each of the LAN monitoring/controlling apparatuses 1 to 13 instructs the packet classification part 39 to classify all the transparent packets into discard packets when the traffic amount of transparent packets generated in a predetermined period of time exceeds a specified value. Therefore, for example, when the traffic amount of the packet transmitted to the LAN network 18 from the subnetwork 26 exceeds a specified value, the LAN monitoring/controlling apparatus 13 independently blocks the subnetwork 26.

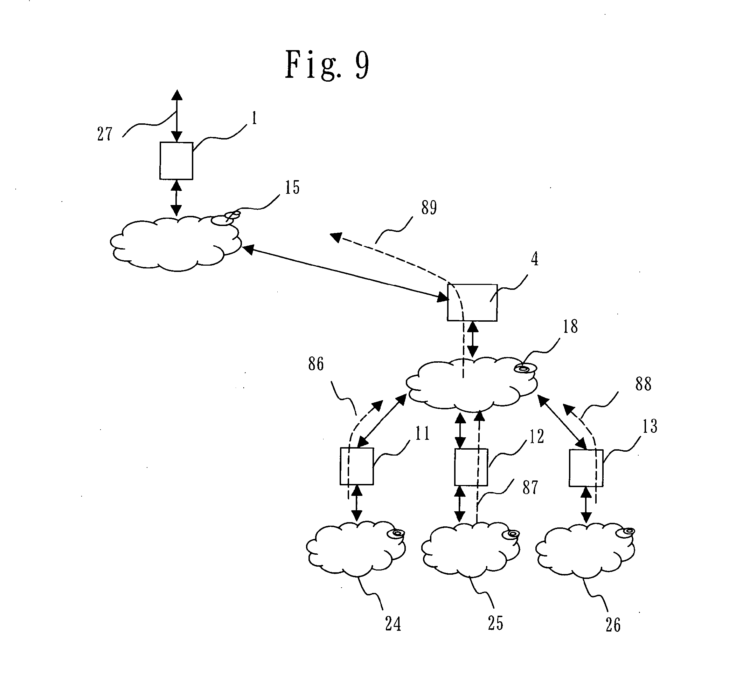

The autonomous blocking as to a transparent packet in an upstream direction will be explained with reference to Fig. 9. Fig. 9 shows a relaying direction of a transparent packet. For example, there is a case that even when the traffic amount of transparent packets 86, 87, and 88 transmitted to the LAN network 18 from each of the subnetworks 24 to 26 does not exceed a specified value, the traffic amount of a transparent packet 89 transmitted from the LAN network 18 to the LAN network 15 exceeds a specified value. In this case, the LAN monitoring/controlling apparatus 4 transmits a blocking instruction to the LAN monitoring/controlling apparatuses 11 to 13. If it is found, based on the monitoring data sent from the LAN monitoring/controlling apparatuses 11 to 13, that change of transmission amount of the transmission packets 87 and 88 from subnetworks 25 and 26 to the LAN network 18 is large, the LAN monitoring/controlling apparatus 4 transmits a blocking instruction only to the LAN monitoring/controlling apparatuses 12 and 13. When an unusual change is not found in the monitoring data obtained from the LAN monitoring/controlling apparatuses 11 to 13, it can be expected that malfunction has occurred in the LAN network 18. For this reason, the LAN monitoring/controlling apparatus 4 changes the transparent packet 89 received from the LAN network 18 into a discard packet. Even in this case, management communication between the LAN monitoring/controlling apparatuses 11 to 13 and the LAN monitoring/controlling apparatus 4 can be secured by classifying the management packet from the LAN monitoring/controlling apparatuses 11 to 13 into a management packet by the packet classification part 39 of the LAN monitoring/controlling apparatus 4.

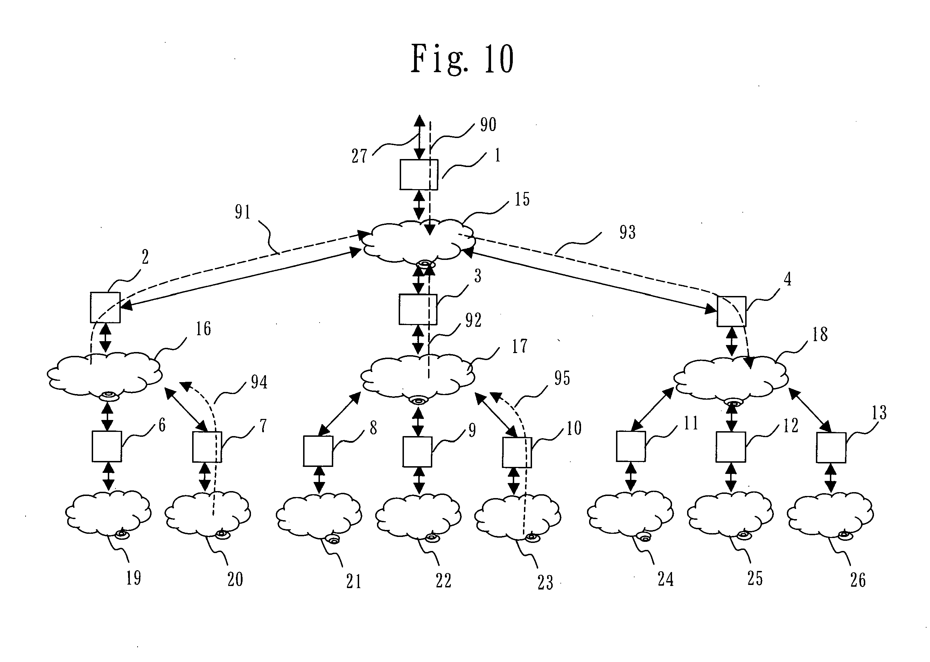

Next, blocking as to a transparent packet in a downstream direction will be explained with reference to Fig. 10. Fig. 10 shows blocking of the transparent packet in the downstream direction. The LAN monitoring/controlling apparatus 4 monitors not only a traffic amount of the transparent packet in the upstream direction but also a traffic amount of the transparent packet in the downstream direction transmitted to the LAN network 18 from the LAN network 15.
(1) When it becomes clear that the traffic amount of a transparent packet 93 from the LAN network 15 exceeds a specified value, the LAN monitoring/controlling apparatus 4 transmits a blocking instruction of transparent packets 90, 91, and 92, to the LAN monitoring/controlling apparatuses 1 to 3. Even in this case, monitoring data is obtained from the LAN monitoring/controlling apparatuses 1 to 3. When it is found, for example, that the increase in the traffic amount of the transparent packet 92 in the LAN monitoring/controlling apparatus 3 is especially large, the LAN monitoring/controlling apparatus 4 transmits a blocking instruction of the transparent packet 92 only to the LAN monitoring/controlling apparatus 3. Moreover, when an unusual respect is not found in the monitoring data received from the LAN monitoring/controlling apparatuses 1 to 3, it can be expected that malfunction has occurred in the LAN network 15. Therefore, the management control part 45 of the LAN monitoring/controlling apparatus 4 instructs the packet classification part 39 to classify the transparent packet 93 received from the LAN network 15 into a discard packet.
(2) Next, the case of the LAN monitoring/controlling apparatus 4 judging that a malfunction exists in an external network interface 27 based on monitoring data from the LAN monitoring/controlling apparatus 1 will be explained. In this case, the LAN monitoring/controlling apparatus 4 transmits an instruction to block (management packet including a blocking instruction) the transparent packet 90 received as a transparent packet from the external network, to the LAN monitoring/controlling apparatus 1. Since being located at the terminal destined for an external network, the LAN monitoring/controlling apparatus 1 which received the blocking instruction changes the transparent packet 90 received from the external network interface 27 into a discard packet.
(3) Next, the case of the LAN monitoring/controlling apparatus 4 transmitting a blocking instruction (management packet including a blocking instruction) to the LAN monitoring/controlling apparatuses 2 and 3 based on the monitoring data from the LAN monitoring/controlling apparatuses 2 and 3 will be explained. As shown in Fig. 10, the LAN monitoring/controlling apparatus 2 is connected to the LAN monitoring/controlling apparatuses 6 and 7 through the LAN network 16, and the LAN monitoring/controlling apparatus 3 is connected to the LAN monitoring/controlling apparatuses 8 to 10 through the LAN network 17. The LAN monitoring/controlling apparatus 2 forwards the blocking instruction to the LAN monitoring/controlling apparatuses 6 and 7. The LAN monitoring/controlling apparatus 3 forwards the blocking instruction to the LAN monitoring/controlling apparatuses 8 to 10. Also in this case, the LAN monitoring/controlling apparatus 4 obtains monitoring data from the LAN monitoring/controlling apparatuses 6 and 7, and the LAN monitoring/controlling apparatuses 8 to 10. When it is found, for example, that change of the traffic amount of the transparent packet in the LAN monitoring/controlling apparatuses 7 and 9 is especially large, the LAN monitoring/controlling apparatus 4 transmits an instruction to block the transparent packets 94 and 95 only to the LAN monitoring/controlling apparatuses 7 and 9. Moreover, when no unusual respect is found in the monitoring data received from the LAN monitoring/controlling apparatuses 6 to 7 and the LAN monitoring/controlling apparatuses 8 to 10, it can be expected that a malfunction exists in the LAN networks 16 and 17. In that case, the LAN monitoring/controlling apparatus 4 instructs the LAN monitoring/controlling apparatus 2 to change the transparent packet 91 received from the LAN network 16 into a discard packet. Moreover, the LAN monitoring/controlling apparatus 4 instructs the LAN monitoring/controlling apparatus 3 to change the transparent packet 92 received from the LAN network 17 into a discard packet.

In the above procedure, when transmitting a blocking instruction, monitoring data on a destination is checked. However, it is not limited to this, and the same effect can also be acquired by the following procedures. For example, the LAN monitoring/controlling apparatus 4 issues a blocking instruction to which a blocking condition has been added, without checking the monitoring data on the transmission destination of the blocking instruction. "Blocking condition" is a condition for instructing to block when the change of traffic amount is unusual. The receiving side of the blocking instruction checks its own monitoring data, and executes the instruction to block when it becomes clear that the blocking condition is fulfilled. Furthermore, the transmitting side (the LAN monitoring/controlling apparatus 4) of the blocking instruction receives a return of result to the issued blocking instruction, from the receiving side. In this case, when receiving the returns that the blocking condition is not fulfilled from all the receiving sides which received the blocking instruction to which the blocking condition has been added, the transmitting side itself performs the blocking since it can be expected that the traffic amount of the transparent packet at each receiving side is proper.

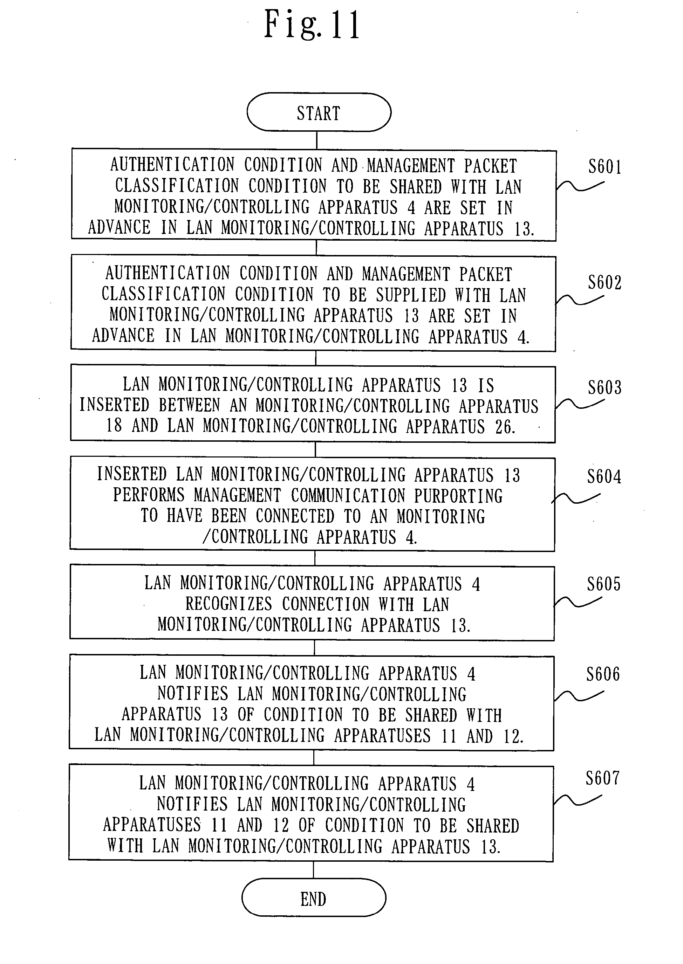

Next, extension procedures of the LAN monitoring/controlling apparatuses 1 to 13 will be explained with reference to Fig. 11. Fig. 11 is a flowchart showing the extension procedures of the LAN monitoring/controlling apparatuses 1 to 13. As an example, the case of adding the LAN monitoring/controlling apparatus 13 between the LAN network 18 and the subnetwork 26 will be explained.
(1) In the LAN monitoring/controlling apparatus 13, an authentication condition and a management packet classification condition which are required for performing management communication with the existing LAN monitoring/controlling apparatus 4 are set in advance(S601).
(2) In the LAN monitoring/controlling apparatus 4 being a connection destination, an authentication condition and a management packet classification condition which are required for performing management communication with the LAN monitoring/controlling apparatus 13 are set in advance (S602).
(3) After completing the advance setting stated above, the LAN monitoring/controlling apparatus 13 is inserted between the LAN network 18 and the subnetwork 26 (S603).
(4) The inserted LAN monitoring/controlling apparatus 13 performs management communication purporting to have been connected to the LAN monitoring/controlling apparatus 4 (S604).
(5) The LAN monitoring/controlling apparatus 4 recognizes the LAN monitoring/controlling apparatus 13 as a new connection destination, and then performs transfer, etc. of management packets from the management apparatus 14 henceforth (S605).
(6) Furthermore, the LAN monitoring/controlling apparatus 4 notifies the LAN monitoring/controlling apparatus 13 of the "authentication condition and management packet classification condition" (an example of management data) required for the management communication with the LAN monitoring/controlling apparatuses 11 and 12 connected to the LAN network 18 (S606).
(7) Similarly, the LAN monitoring/controlling apparatus 4 also notifies the LAN monitoring/controlling apparatuses 11 and 12 of the authentication condition and the management packet classification condition which are required for management communication with the LAN monitoring/controlling apparatus 13. Thereby, the LAN monitoring/controlling apparatus 13 can have management communication with the LAN monitoring/controlling apparatuses 11 and 12 (S607).
(8) In the above steps of S601 to S607, the authentication condition and the management packet classification condition have been directly set up beforehand in the LAN monitoring/controlling apparatuses 4 and 13. However, it is also acceptable that the management apparatus 14 notifies the LAN monitoring/controlling apparatus 4 of the authentication condition and the management packet classification condition which are required for the management communication with the LAN monitoring/controlling apparatus 13 in advance.

As mentioned above, since the LAN monitoring/controlling apparatuses 1 to 13 operate as repeaters, they can be easily inserted without changing the setup of the existing network.

A management packet transmitted and received among the LAN monitoring/controlling apparatuses 1 to 13 is identified depending upon packet headers of a plurality of fields by the packet classification part 39, to authenticate by the packet authentication part 44, and when an authentication error occurs, the packet classification part 39 is changed. Therefore, it is possible to quickly avoid the attack because of an illegal packet, to the management communication.
Furthermore, since priority is given to transmission of a management packet by the transmission priority control part 51, management communication among the LAN monitoring/controlling apparatuses 1 to 13 can be secured even in an attack being generated by an unexpected illegal packet.

Moreover, the LAN monitoring/controlling apparatuses 1 to 13 are hierarchically arranged along the LAN configuration, a request from the management apparatus 14 is dispersed among the LAN monitoring/controlling apparatuses 1 to 13, and returns from the LAN monitoring/controlling apparatuses 1 to 13 are integrated to be sent back to the management apparatus 14. Therefore, the management apparatus 14 can issue a monitoring request, without concerning about the arrangement of the LAN monitoring/controlling apparatuses 1 to 13, can understand the arrangement of the LAN monitoring/controlling apparatuses 1 to 13 based on a result of the return from the LAN monitoring/controlling apparatuses 1 to 13, and can easily react to an increase in the number and an increased scale of the management range of the LAN monitoring/controlling apparatuses 1 to 13.
Furthermore, since it is possible to reduce directly sending/receiving a packet among the management apparatus 14 and each of the LAN monitoring/controlling apparatus 1 to 13, a communication load of the management apparatus 14 and a network load by management communication can be suppressed.

Moreover, since the LAN monitoring/controlling apparatuses 1 to 13 are arranged hierarchically along the LAN configuration and a transparent packet can be discarded in each of the LAN monitoring/controlling apparatuses 1 to 13, it is possible to isolate a network in a small-scale unit of subnetwork 19 to 26 level. Therefore, communication among other normal networks can be secured.

Since an authentication condition and a classification condition are shared among the LAN monitoring/controlling apparatuses 1 to 13 at each of the LAN networks 15 to 18, and the LAN monitoring/controlling apparatuses 2 to 4 mediate between the LAN network 15 and the LAN networks 16 to 18, the range of management communication performed directly by each of the LAN monitoring/controlling apparatuses 1 to 13 can be narrowed, and the management range can be largely broadened. Moreover, when extending the LAN monitoring/controlling apparatuses 1 to 13, since the data required for management communication can be obtained by the management communication with one existing LAN monitoring/controlling apparatus, for example the LAN monitoring/controlling apparatus 4 connected to the LAN network 18 which is a connection destination, it is possible to easily perform extending upon largely broadening the management range.

In the network system 1000 of Embodiment 1, since each of a plurality of the LAN monitoring/controlling apparatuses classifies a received packet into at least either a transparent packet or a management packet, it is possible to promptly react to an attack by an illegal packet.

In the network system 1000 of Embodiment 1, since each LAN monitoring/controlling apparatus decodes and transfers a packet including a request from the management apparatus, it is possible to certainly perform transferring the request of the management apparatus.

In the network system 1000 of Embodiment 1, since returns from the LAN monitoring/controlling apparatuses are integrated to send back to the management apparatus, the number of packets can be reduced. Moreover, the management apparatus can obtain information on the configuration of the arrangement of the LAN monitoring/controlling apparatuses in the network.

In the network system 1000 of Embodiment 1, when returning to the management apparatus from the LAN monitoring/controlling apparatus, route data is included in the return. Therefore, the management apparatus can exactly understand the route to each LAN monitoring/controlling apparatus.

In the network system 1000 of Embodiment 1, the LAN monitoring/controlling apparatus stores route data sent from other management apparatus. Therefore, the LAN monitoring/controlling apparatus can exactly understand the route to other LAN monitoring/controlling apparatus.

In the network system 1000 of Embodiment 1, when a LAN monitoring/controlling apparatus is newly installed, it receives management data from the LAN monitoring/controlling apparatus already installed. Therefore, it is possible to easily install the LAN monitoring/controlling apparatus.

Since the LAN monitoring/controlling apparatus of Embodiment 1 classifies a packet received from the packet classification part into at least either a transparent packet or a management packet, it is possible to promptly react to an illegal attack.

In the LAN monitoring/controlling apparatus of Embodiment 1, since the packet classification part classifies a packet into a monitor packet, it is possible to monitor a specific packet in the received packets.

Since the LAN monitoring/controlling apparatus of Embodiment 1 classifies a packet which has been classified as a transparent packet, into a discard packet based on the measurement result of the transparent packet counter, it is possible to promptly react to an attack by an illegal packet.

Since the LAN monitoring/controlling apparatus of Embodiment 1 classifies a packet which has been received as a transparent packet, into a discard packet to discard, based on a blocking instruction, it is possible to promptly react to an attack by an illegal packet.

Since the LAN monitoring/controlling apparatus of Embodiment 1 classifies a packet to which authentication data is added, into a management packet to authenticate, it is possible to improve securing of management communication even when attacked by an illegal packet.

Since the LAN monitoring/controlling apparatus of Embodiment 1 gives priority to a transmission packet for management communication over a transparent packet in transmitting, it is possible to secure management communication even when attacked by an illegal packet.

Since the LAN monitoring/controlling apparatus of Embodiment 1 adds a header indicating being a transmission packet for management communication, to a transmission packet for management communication, it is possible to improve securing of management communication.

Since the LAN monitoring/controlling apparatus of Embodiment 1 adds authentication data to a transmission packet for management communication and transmits it, it is possible to improve securing of management communication.

In the LAN monitoring/controlling apparatus of Embodiment 1, the management control part stores a management packet classification condition, and the packet classification part classifies a received packet into a management packet, based on the management packet classification condition notified by the management control part. Therefore, it is possible to set up a management packet classification condition without restriction.

In the LAN monitoring/controlling apparatus of Embodiment 1, since the management control part renotifies a packet classification part of a management packet classification condition, and the packet classification part classifies a packet into a management packet based on the management packet classification condition notified again, it is possible to promptly react to unusualness of the management packet.

### Embodiment 2

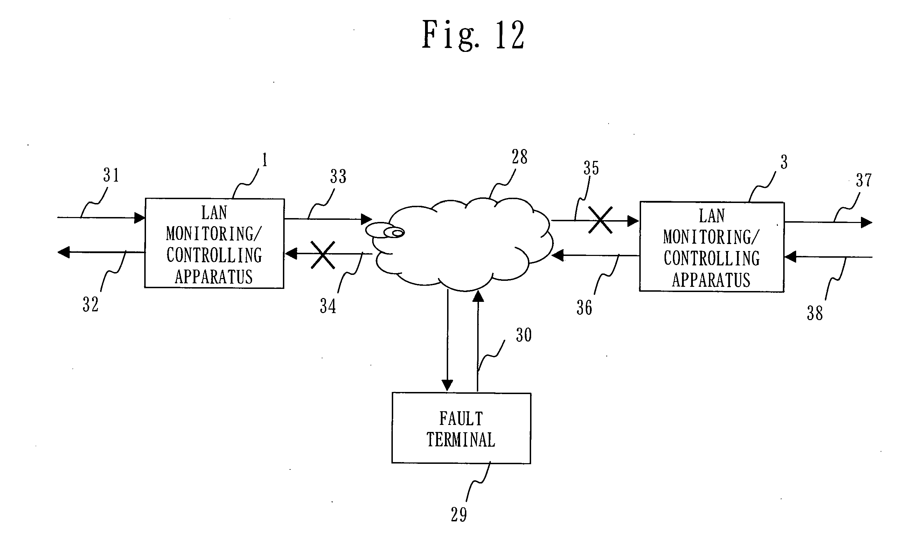

Embodiment 2 will be explained with reference to Figs. 12 to 14. As stated in Embodiment 1, LAN is monitored and controlled by hierarchically and comprehensively arranging the LAN monitoring/controlling apparatuses 1 to 13. In Embodiment 2, the case of the LAN monitoring/controlling apparatuses mutually performing packet communications through a network in which a fault is generated.

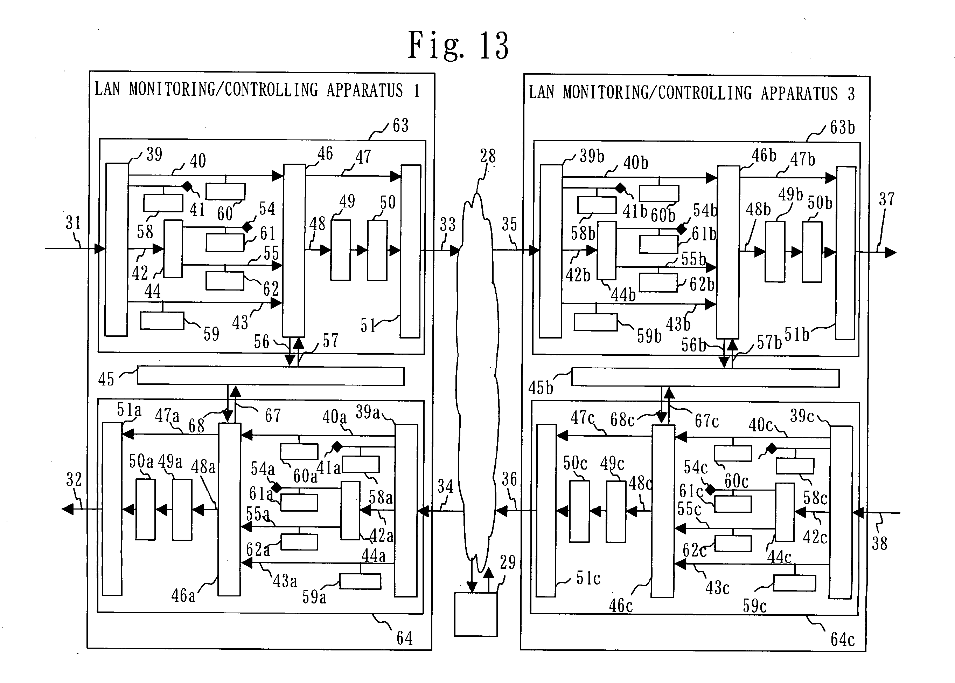

Fig. 12 shows a connection relation between the LAN monitoring/controlling apparatus and the network described in Embodiment 2. Fig. 13 is a block diagram describing Fig. 12. The LAN monitoring/controlling apparatuses 1 and 3 shown in Fig. 13 have the same configurations as those in Fig. 3. As shown in Figs. 12 and 13, a fault subnetwork 28 where a fault is occurring is connected to the LAN monitoring/controlling apparatuses 1 and 3 and a fault terminal 29 which is a cause of the fault.
(1) The fault terminal 29 has been infected by virus etc. and transmits an illegal packet. The illegal packet flows through the fault subnetwork 28. The fault terminal 29 sends an illegal packet input 30 into the fault subnetwork 28.
(2) The LAN monitoring/controlling apparatus 1 inputs a downstream input 31 which is an input from the upper level network to the LAN monitoring/controlling apparatus 1, and outputs a downstream output 33 which is an output to the lower level network including the fault subnetwork 28. Moreover, the LAN monitoring/controlling apparatus 1 inputs an upstream input 34 from the lower level network including the fault subnetwork 28, and outputs an upstream output 32 which is an output to the upper level network.
(3) The LAN monitoring/controlling apparatus 3 inputs a downstream input 35 which is an input from the upper level subnetwork including the fault subnetwork, and outputs a downstream output 37 which is an output to the lower level network. Moreover, the LAN monitoring/controlling apparatus 3 inputs an upstream input 38 which is an input to the upper level network, and outputs an upstream output 36 which is an output to the upper level network including the fault subnetwork 28.

It is assumed that the upper level network connected to the downstream input 31 and the upstream output 32, and the lower level network connected to the downstream output 37 and the upstream input 38 are normal.

Next, operations will be explained. When the LAN monitoring/controlling apparatus 1 knows that a fault is generated in the fault subnetwork 28, it classifies the transparent packet received from the fault subnetwork 28 through the upstream input 34, into a discard packet by a packet classification part 39a to discard, in order to block the illegal packet input 30 sent from the fault terminal 29 via the fault subnetwork 28. Moreover, in order to block the illegal packet sent from the fault terminal 29 via the fault subnetwork 28, the LAN monitoring/controlling apparatus 3 classifies the transparent packet received as the downstream input 35 which is an input from the fault subnetwork 28, into a discard packet by the packet classification part 39b to discard. In this way, the fault subnetwork 28 is blocked from the upper level network of the LAN monitoring/controlling apparatus 1 and the lower level network of the LAN monitoring/controlling apparatus 3.

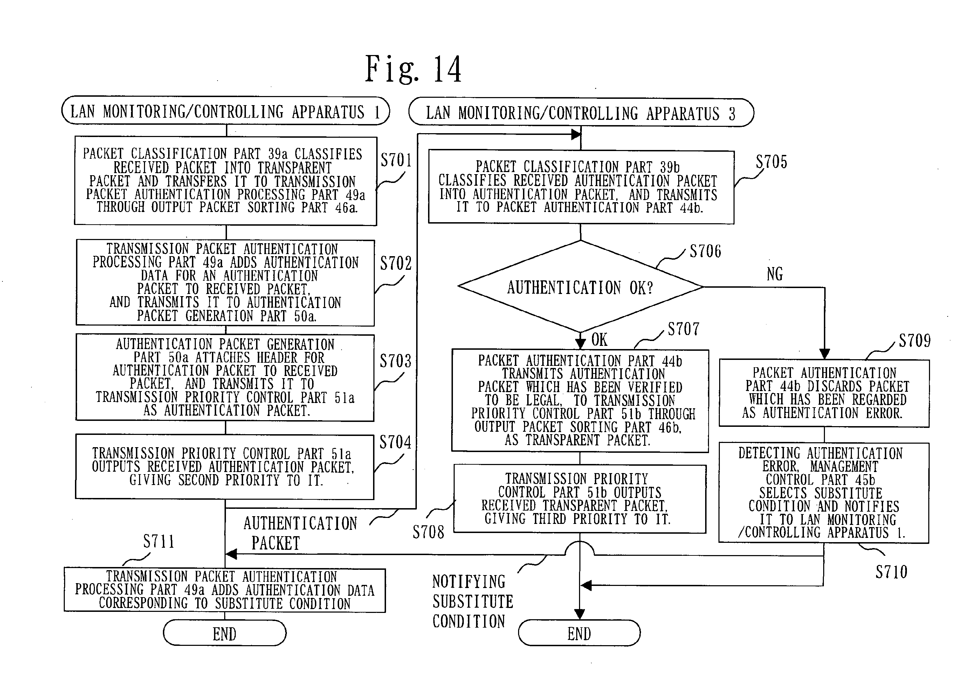

Next, sending/receiving an authentication packet will be explained with reference to Fig. 14. Fig. 14 is a flowchart showing the sending/receiving of the authentication packet.
(1) In such a state that the upstream input 34 and the downstream input 35 are blocked, when receiving a packet addressed to the lower level network connected to the downstream output 37 of the LAN monitoring/controlling apparatus 3, from the downstream input 31, the LAN monitoring/controlling apparatus 1 classifies the received packet into a "transparent packet" (object packet) by the packet classification part 39, and transmits it to the transmission packet authentication processing part 49 through the output packet sorting part 46 (S701).
(2) The transmission packet authentication processing part 49 adds authentication data for an authentication packet towards the LAN monitoring/controlling apparatus 3, to the received packet, and transmits it to the authentication packet generation part 50 (S702).
(3) The authentication packet generation part 50 attaches a header for an authentication packet towards the LAN monitoring/controlling apparatus 3, to the received packet with authentication data, and transmits it to the transmission priority control part 51 as an authentication packet (S703).
(4) The transmission priority control part 51 outputs the received authentication packet, giving the second priority to it, to the downstream output 33, and transmits it to the LAN monitoring/controlling apparatus 3 via the fault subnetwork 28 (S704).
(5) Receiving the authentication packet from the downstream input 35, the LAN monitoring/controlling apparatus 3 classifies it into an authentication packet by the packet classification part 39b, and transmits it to the packet authentication part 44b (S705). As to the authentication packet classification condition for classifying it into an authentication packet, the management control part 45b of the LAN monitoring/controlling apparatus 3 notifies the condition to the packet classification part 39b. The packet classification part 39b performs classifying according to the notified authentication packet classification condition. In addition, in a predetermined case, the management control part 45b renotifies the authentication packet classification condition to the packet classification part 39b. The packet classification part 39b classifies according to the condition renotified.
(6) The packet authentication part 44b inspects the validity of the authentication data in the received packet, and verifies the validity of the packet (S706).
(7) After verifying that it is a legal authentication packet, the packet authentication part 44b transmits it to a transmission priority control part 51b as a transparent packet, through the output packet sorting part 46b (S707). The case of the authentication not being approved will be mentioned later.
(8) The transmission priority control part 51b outputs the received packet, giving the third priority to it, to the downstream output 37 as a transparent packet (S708).
(9) By the above steps, the normal transparent packet sent to the downstream input 31 of the LAN monitoring/controlling apparatus 1 is transmitted to the LAN monitoring/controlling apparatus 3 through the fault subnetwork 28, and relayed to the downstream output 37 of the LAN monitoring/controlling apparatus 3.

Next, the case of authentication of the authentication packet being an error (NG at S706) will be explained.
(1) When it becomes an authentication error based on inspection by the packet authentication part 44b of the LAN monitoring/controlling apparatus 3 (NG at S706), the LAN monitoring/controlling apparatus 3 discards the packet concerned (S709).
(2) The LAN monitoring/controlling apparatuses 1 and 3 share a plurality of kinds of authentication packet classification conditions for authentication packets in advance, and when an authentication error occurs, the condition is switched. The LAN monitoring/controlling apparatus 3 at the receiving side which detected the authentication error selects a substitute authentication packet classification condition from the authentication packet classification conditions of a plurality of kinds currently being shared, and notifies the substitute authentication packet classification condition to the LAN monitoring/controlling apparatus 1 (S710).
   Specifically, the management control part 45 of the LAN monitoring/controlling apparatus 1 and the management control part 45b of the LAN monitoring/controlling apparatus 3 respectively store and share a plurality of authentication packet classification conditions. When an authentication error occurs, the management control part 45b selects a substitute authentication packet classification condition and notifies the substitute authentication packet classification condition to the LAN monitoring/controlling apparatus 1 while notifying the substitute authentication packet classification condition to its own packet classification part 39b. The LAN monitoring/controlling apparatus 1 transmits an authentication packet corresponding to the substitute authentication packet classification condition henceforth. This substitution of the authentication packet classification condition can be performed by changing the contents of the header added to the authentication packet generation part 50, for example. Moreover, the management control part 45b of the LAN monitoring/controlling apparatus 3 instructs the packet classification part 39b to change the authentication packet classification condition at the time of an authentication error occurring, into a discard packet classification condition. In addition, the management control part 45b of the LAN monitoring/controlling apparatus 3 may change the authentication packet classification condition based on the count number of authentication errors by an authenticated packet counter 62b.
   The management control part 45b renotifies the packet classification part 39b of the authentication packet classification condition based on the error count number of the authenticated packet counter 62b. The packet classification part 39b classifies packets based on the condition notified again.

As mentioned above, since the LAN monitoring/controlling apparatuses 1 and 3 change a packet to be relayed between normal networks into an authentication packet and relay it through the fault subnetwork 28 currently blocked, communications between the normal subnetworks can be secured.

In the LAN monitoring/controlling apparatus of Embodiment 2, the management control part stores an authentication packet classification condition, and the packet classification part classifies a received packet into an authentication packet based on the authentication packet classification condition notified by the management control part. Thus, it is possible to set up an authentication packet classification condition without restriction.

In the LAN monitoring/controlling apparatus of Embodiment 2, the management control part renotifies the authentication packet classification condition to the packet classification part, and the packet classification part classifies a packet into an authentication packet based on the authentication packet classification condition notified again. Thus, packet communications between normal networks can be secured.

### Embodiment 3

Next, Embodiment 3 will be explained with reference to Figs. 2 and 15 to 17. Further details of the LAN monitoring/controlling apparatus 1 described with reference to Fig. 2 will be explained in Embodiment 3.

As mentioned in Embodiment 1, the LAN monitoring/controlling apparatus 1 includes the downstream packet processing part 63, the management control part 45, and the upstream packet processing part 64.

With reference to Fig. 2, the configuration of the downstream packet processing part 63 will be explained. The downstream packet processing part 63 includes the packet classification part 39, the packet authentication part 44, the output packet sorting part 46, the transmission packet authentication processing part 49 (authentication data adding part), the authentication packet generation part 50 (an example of the header adding part), and the transmission priority control part 51 (an example of the transmission part). The packet classification part 39 includes the management packet counter 85 which measures the number of packets classified as management packets. The downstream packet processing part 63 includes the following five packet counters. The transparent packet counter 60 for counting the number of transparent packets, the discarded packet counter 58 for counting the number of discard packets, the illegal packet counter 61 for counting the number of the illegal packets regarded as illegal based on a result of authentication, the authenticated packet counter 62 for counting the number of packets having been authenticated, and the monitor packet counter 59 for counting the number of monitor packets. As mentioned above, the upstream packet processing part 64 has the same configuration as that of the downstream packet processing part 63.

Next, the function of each configuration element, and packets outputted and inputted will be explained.
(1) The packet classification part 39 classifies input packets into a transparent packet, a discard packet, a management packet, an authentication packet, and a monitor packet.
(2) A transparent packet output 40 is an output of the transparent packet of the packet classification part 39.
(3) A discard packet output 41 is an output of the discard packet of the packet classification part 39.
(4) An authentication packet output 42 is an output of the packet classified into a management packet or an authentication packet by the packet classification part 39.
(5) A monitor packet output 43 is an output of the monitor packet classified by the packet classification part 39.
(6) The packet authentication part 44 authenticates a management packet or an authentication packet.
(7) The management control part 45 decodes a management packet, performs sending/receiving and processing of management communication, and performs management and control of the whole LAN monitoring/controlling apparatus 1. Moreover, the management control part 45 stores the management packet classification condition and the authentication packet classification condition as mentioned later.
(8) The output packet sorting part 46 sorts the outputs from the packet classification part 39, the packet authentication part 44, and the management control part 45 in accordance with the attribute of a packet.
(9) A transparent packet output 47 is an output of the transparent packet from the output packet sorting part 46.
(10) An authentication packet output 48 is an output of the authentication packet from the output packet sorting part 46.
(11) The transmission packet authentication processing part 49 adds authentication data required for outputting a management packet or an authentication packet.
(12) The authentication packet generation part 50 adds a header as a management packet or an authentication packet, to the packet to which the authentication data has been added.
(13) The transmission priority control part 51 transmits a management packet, giving it the first priority, an authentication packet, giving it the second priority, and a transparent packet, giving it the third priority.
(14) In the LAN monitoring/controlling apparatus 1, the downstream packet input 52 is an input of a packet going from the upper level system to the lower level system.
(15) In the LAN monitoring/controlling apparatus 1, the downstream packet output 53 is an input of a packet going from the upper level system to the lower level system.
(16) The illegal packet output 54 is an output of a packet judged to be illegal by the packet authentication part 44.
(17) The authenticated packet output 55 is an output of a packet judged to be legal based on a result of the authentication by the packet authentication part 44.
(18) A downstream input 56 is an input to the management control part 45 which inputs a management packet etc. from the downstream packet input 52.
(19) A downstream output 57 is an output of the management control part 45 which outputs a management packet etc. to the downstream packet output 53.
(20) The discarded packet counter 58 accumulates the number of discard packets outputted to the discard packet output 41.
(21) The monitor packet counter 59 accumulates the number of monitor packets outputted to the monitor packet output 43.
(22) The transparent packet counter 60 accumulates the number of transparent packets outputted to the transparent packet output 40.
(23) The illegal packet counter 61 accumulates the number of illegal packets, causing the authentication error, outputted to the illegal packet output 54.
(24) The authenticated packet counter 62 accumulates the number of authenticated packets outputted to the authenticated packet output 55.
(25) The downstream packet processing part 63 is the whole of configuration where packets inputted from the downstream packet input are processed.
(26) The upstream packet processing part 64 being a pair with the downstream packet processing part 63 and performs processing of an upstream packet.
(27) The upstream packet input 65 is an input of a packet going to the upper level system from the lower level system.
(28) The upstream packet output 66 is an output of a packet going to the upper level system from the lower level system.
(29) A management control part upstream input 67 is an input of a management packet, etc. to the management control part 45. (30) A management control part upstream output 68 is an output from the management control part 45 to an upstream packet processing part.

It is possible to obtain the downstream packet processing part 63 composed of the packet classification part 39, the packet authentication part 44, the output packet sorting part 46, the transmission packet authentication processing part 49, the authentication packet generation part 50 and the transmission priority control part 51, and the upstream packet processing part 64 being a pair with the downstream packet processing part 63, only based on hardware logic. The downstream packet processing part 63 and the upstream packet processing part 64 perform processing of classification, authentication, relay, discard, etc. of a packet, at the transmission speed of the LAN. On the other hand, the management control part 45 controlled by a program performs more complicated processing, such as monitoring the network, judging the blocking, setting and changing an authentication condition and a classification condition, and processing of management communication.

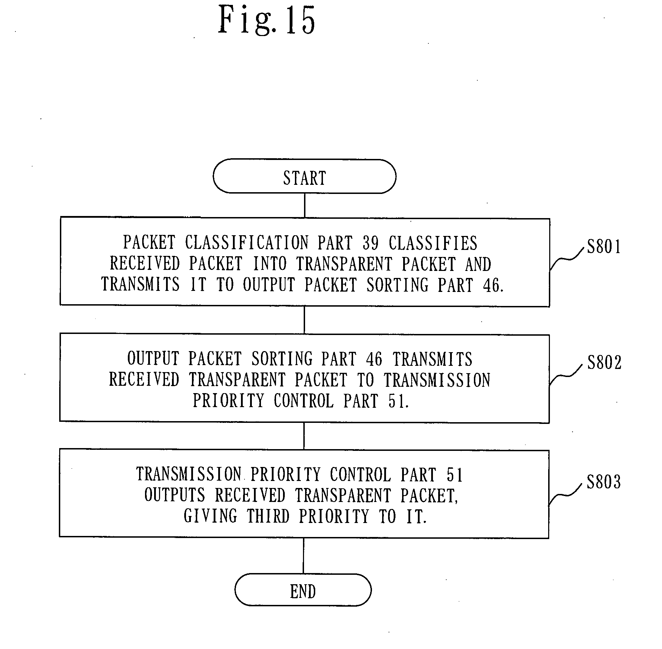

Next, operations at the normal time of the LAN (network system 1000) will be explained with reference to Fig. 15. Fig. 15 is a flowchart showing the normal relay operation.
In the normal operation time, the packet classification part 39 of the LAN monitoring/controlling apparatus 1, when receiving a packet to be relayed, classifies it into a transparent packet, and makes it penetrate inside its own apparatus. The operation of the LAN monitoring/controlling apparatus 1 relaying a packet will be explained.
(1) When receiving a packet to be relayed, from the downstream packet input 52, the LAN monitoring/controlling apparatus 1 classifies it into a transparent packet by the packet classification part 39, and transmits it to the output packet sorting part 46 via the transparent packet output 40 (S801).
(2) The output packet sorting part 46 transmits the transparent packet received from the transparent packet output 40 to the transmission priority control part 51 via the transparent packet output 47 (S802).
(3) The transmission priority control part 51 outputs the transparent packet received from the transparent packet output 47 to the downstream packet output 53, giving the third priority to it (S803).
(4) In this way, the LAN monitoring/controlling apparatus 1 transparently relays the packet received from the downstream packet input 52 to the downstream packet output 53.

On the other hand, receiving a packet to be relayed from the upstream packet input 65, the LAN monitoring/controlling apparatus 1, as known by the configuration shown in Fig. 3, transparently relays it to the upstream packet output 66, by performing processing equivalent to the above processing of the downstream packet processing part 63 by the upstream packet processing part 64. By dint of the above operation, the LAN monitoring/controlling apparatus 1 externally seems to be transparent as a repeater.

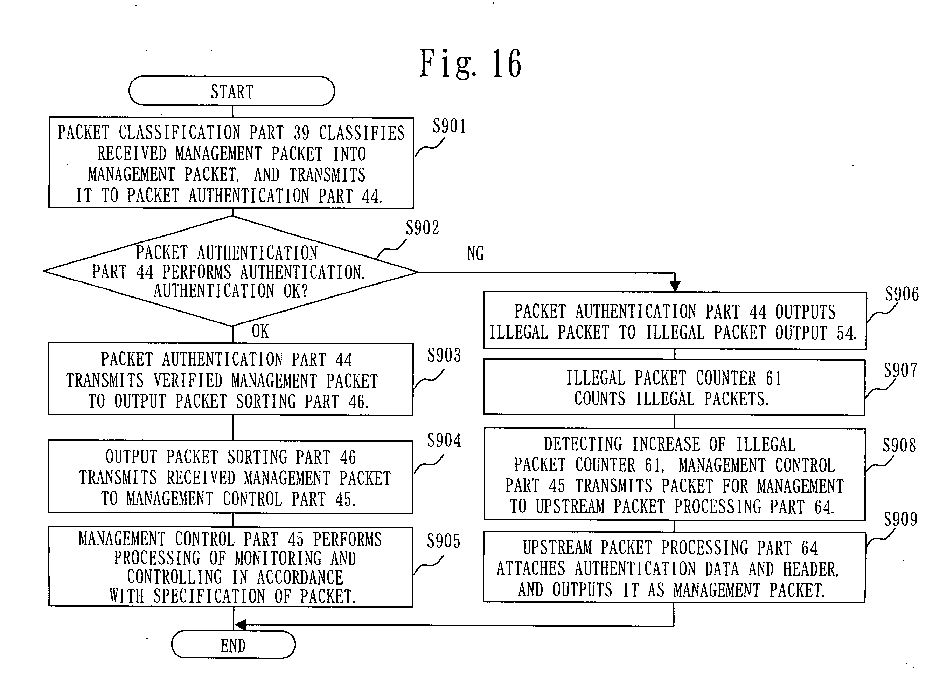

Next, operations at the time of the LAN monitoring/controlling apparatus 1 receiving a management packet will be explained with reference to Fig. 16. Fig. 16 shows operations when the LAN monitoring/controlling apparatus 1 receives a management packet.
(1) Receiving a management packet from the downstream packet input 52, the LAN monitoring/controlling apparatus 1 classifies the input packet into a management packet by the packet classification part 39, and transmits it to the packet authentication part 44 for authentication processing, via the authentication packet output 42 (S901).
(2) The packet authentication part 44 inspects the received management packet (S902), and when verifying to be valid, transmits it to the output packet sorting part 46 via the authenticated packet output 55 (S903).
(3) The output packet sorting part 46 understands the packet to be a management packet, and transmits it to the management control part 45 via the management control part downstream input 56 (S904).
(4) The management control part 45 performs processing of monitoring and controlling in accordance with the specification of the packet (S905).

On the other hand, when receiving a management packet from the upstream packet input 65, the LAN monitoring/controlling apparatus 1 transmits it to the management control part 45 via the management control part upstream input 67, by performing the same processing as that of the downstream packet processing part 63 by the upstream packet processing part 64.

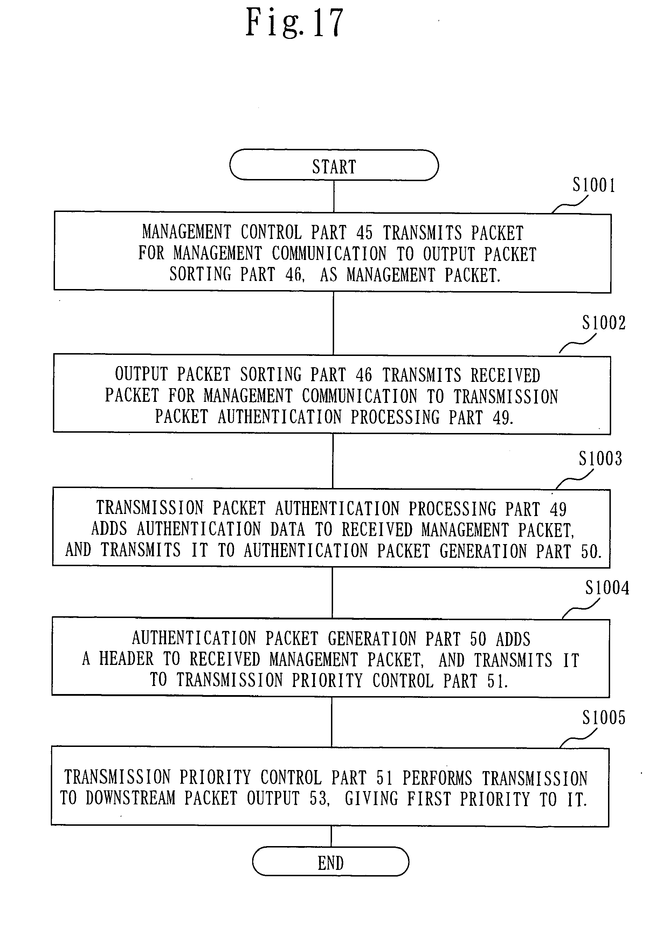

Next, operations at the time of the LAN monitoring/controlling apparatus 1 transmitting a management packet will be explained with reference to Fig. 17. Fig. 17 is a flowchart showing procedures of transmitting a management packet by the LAN monitoring/controlling apparatus 1. It is assumed the case of Fig. 3.
(1) When transmitting (outputting) a management packet to the downstream packet output 53 from the LAN monitoring/controlling apparatus 1, the management control part 45 transmits the packet for management communication, as the management control part downstream output 57, to the output packet sorting part 46, as a management packet (S1001).
(2) The output packet sorting part 46 transmits the received packet for management communication to the transmission packet authentication processing part 49 as a management packet in order to add authentication data to the packet concerned (S1002).
(3) The transmission packet authentication processing part 49 adds authentication data for management communication to the received packet, and transmits it to the authentication packet generation part 50 as a management packet (S 1003).
(4) The authentication packet generation part 50 adds a header for management communication to the received packet, and transmits it to the transmission priority control part 51 as a management packet (S1004).
(5) The transmission priority control part 51 understands the packet to be a management packet, and transmits it to the downstream packet output 53, giving the first priority to it (S1005).

On the other hand, when transmitting a management packet to the upstream packet output 66 from the LAN monitoring/controlling apparatus 1, the management control part 45 transmits the packet for management communication to the upstream packet processing part 64 from the management control part upstream output 68 as a management packet. The upstream packet processing part 64 performs the same processing as the above processing of the downstream packet processing part 63 in order to output the management packet to the upstream packet output 66.
(1) When the LAN monitoring/controlling apparatus 1 receives a management packet from the downstream packet input 52, and it is judged to be an illegal packet based on a result of the inspection by the packet authentication part 44 (S902) (NG of S902), the packet authentication part 44 outputs the packet to the illegal packet output 54 (S906).
(2) The illegal packet counter 61 counts illegal packets outputted to the illegal packet output 54 (S907).
(3) The management control part 45 monitors the counting result. If the management control portion 45 detects that the value of the illegal packet counter 61 has increased, a packet for management is sent to the upstream packet processing part 64 from the management control part upstream output 68 in order to notify the transmitting side of the management packet that an authentication error has occurred (S908).
(4) The upstream packet processing part 64, which received this packet for management, attaches authentication data and a header for a management packet, and outputs it to the upstream packet output 66 as a management packet (S909).

Next, operations at the time of the LAN monitoring/controlling apparatus 1 blocking the network will be explained with reference to Fig. 3. The case where the LAN monitoring/controlling apparatus 1 blocks the upstream side network from the downstream side network depending upon the instruction, etc. from the management apparatus 14, for example, will be explained. It corresponds to the case of blocking a packet input from the downstream packet input 52 in Fig. 3.
The management control part 45 changes the transparent packet classification condition of the packet classification part 39 into the classification condition of discard packets. This change makes the packet classification part 39 classify henceforth all the packets to be transparently relayed, which are received by the downstream packet input 52, into discard packets to discard. Due to the above stated, the LAN monitoring/controlling apparatus 1 blocks the packet from the upstream side network to the downstream side, and blocks the upstream side network from the downstream side network. On the contrary, when blocking the downstream side network from the upstream side network, the management control part 45 makes the packet classification part 39a of the upstream packet processing part 64 change the transparent packet classification condition into the discard packet classification condition. Due to this, the upstream packet processing part 64 discards all the packets to be relayed, which are received from the upstream packet input 65, by performing the same processing as the above-mentioned operation of the downstream packet processing part 63, and blocks the downstream side network from the upstream side network.

As explained in Embodiment 2, the LAN monitoring/controlling apparatus 1 relays an authentication packet. Since this respect has been explained with reference to Figs. 13 and 14 in Embodiment 2, detailed explanation will be omitted.

Next, the monitoring function of a received packet in the LAN monitoring/controlling apparatus 1 will be explained. The management control part 45 observes the management packet counter 85, the transparent packet counter 60, the discarded packet counter 58, the illegal packet counter 61, the authenticated packet counter 62, and the monitor packet counter 59, and monitors traffic amount of each packet.

Moreover, by setting a monitor packet classification condition of the packet classification part 39, the management control part 45 outputs a copy of the packet to be monitored to the monitor packet output 43, and monitors generation frequency by the monitor packet counter 59. Furthermore, according to need, the management control part 45 inputs a monitor packet from the output packet sorting part 46, as the management control part downstream input 56, and analyzes the inputted monitor packet. As to the upstream packet input 65 as well as the downstream packet processing part 63, the management control part 45 controls the upstream packet processing part 64, monitors generation frequency of each packet, and inputs a monitor packet from the management control part upstream input 67 to analyze.

In addition, the packet classification condition used in the packet classification part 39, the authentication condition of a management packet and an authentication packet used in the packet authentication part 44, the authentication condition of a management packet and an authentication packet used in the transmission packet authentication processing part 49, and the header generation condition of a management packet and an authentication packet generated in the authentication packet generation part 50 are set in each processing part beforehand by the management control part 45, and are changed at the timing explained in Embodiments 1 and 2 by the management control part 45 in order to react to an attack etc.

Since the LAN monitoring/controlling apparatus 1 is structured as mentioned above, even if an attack by an unexpected illegal packet is occurring, communication between normal networks can be secured while blocking the illegal packet.

### Embodiment 4

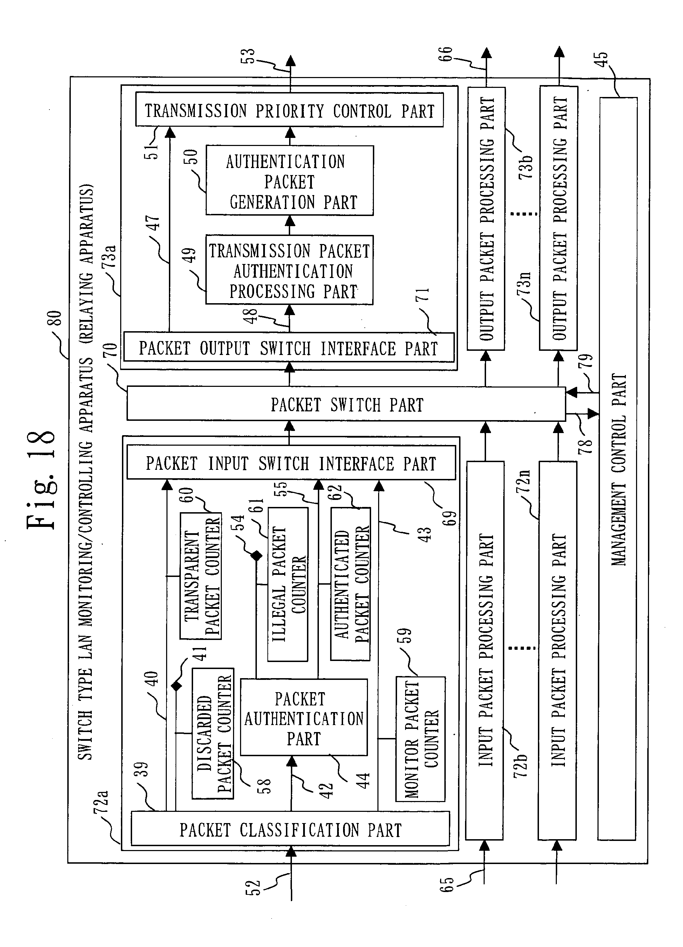

Embodiment 4 will be explained with reference to Figs. 18 to 21. Although the configuration of the LAN monitoring/controlling apparatus 1 described in Embodiment 3 has a pair of input and output, now an embodiment of an apparatus having a plurality of inputs and outputs and also capable of being used as a switch will be described.

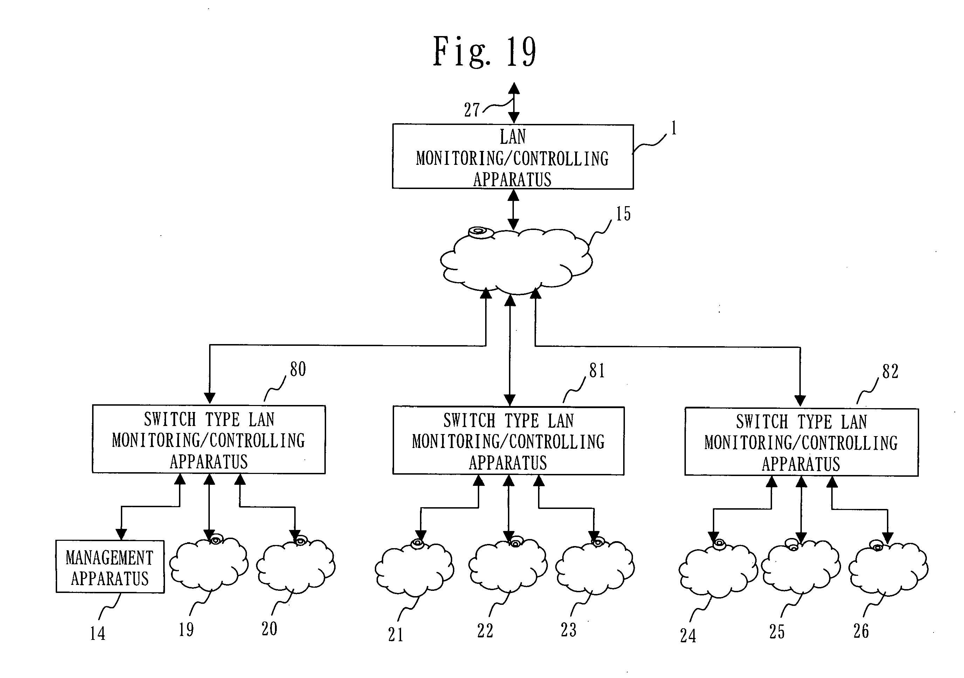

Fig. 18 is a block diagram showing an example of the above-stated switch type LAN monitoring/controlling apparatus 80. Fig. 19 shows an example of a network configuration using such switch type LAN monitoring/controlling apparatus 80. Elements having the same numbers as those of Embodiments 1 to 3 have the same functions as those of them.

The configuration of the switch type LAN monitoring/controlling apparatus 80 will be explained. The switch type LAN monitoring/controlling apparatus 80 includes a plurality of input packet processing parts 72a, 72b, ... 72n for inputting packets, a plurality of output packet processing parts 73a, 73b, ... 73n for outputting packets, a packet switch part 70, and the management control part 45.

The configuration of the input packet processing part 72a, etc. is similar to that of the input side in the case of dividing the downstream packet processing part 63 of the LAN monitoring/controlling apparatus 1 into an input side (the packet classification part 39 side) and an output side (the transmission priority control part side), regarding the output packet sorting part 46 as a base. The input packet processing part 72a, etc. further includes a packet input switch interface part 69. Similarly, the configuration of the output packet processing part 73a, etc. is similar to that of the output side in the case of regarding the output packet sorting part 46 as the base. The output packet processing part 73a, etc. further includes a packet output switch interface part 71.

The function of each element will be explained.
(1) The packet input switch interface part 69 distributes a received packet classified by the packet classification part 39 to a transmission destination.
(2) The packet switch part 70 transmits a packet in the switch type LAN monitoring/controlling apparatus 80.
(3) The packet output switch interface part 71 receives a packet for transmission from the packet switch part 70.
(4) The input packet processing part 72a is the first input packet processing part that classifies and authenticates the packet received in the downstream packet input 52, and determines a transmission destination of the packet.
(5) The output packet processing part 73a is the first output packet processing part that adds a header suitable for the authentication data and the classification condition to a packet for transmission, and transmits the packet to the downstream packet output 53 upon controlling the priority depending upon the attribute of the packet.
(6) The input packet processing part 72b is the second input packet processing part that performs processing of the received packet from the upstream packet input 65.
(7) The output packet processing part 73b is the second output packet processing part that performs processing of the transmission packet to be transmitted to the upstream packet output 66.
(8) The input packet processing part 72n is the n-th input packet processing part that performs processing of other input packet.
(9) The output packet processing part 73n is the n-th output packet processing part that performs processing of other output packet.
(10) A management control part integration input 78 is an input of a packet sent to the management control part 45 from each of the input packet processing parts 72a, 72b ... 72n.
(11) A management control part integrated output 79 is an output of a packet for transmission to be transmitted from the management control part 45 to each of the output packet processing parts 73a, 73b ... 73n.

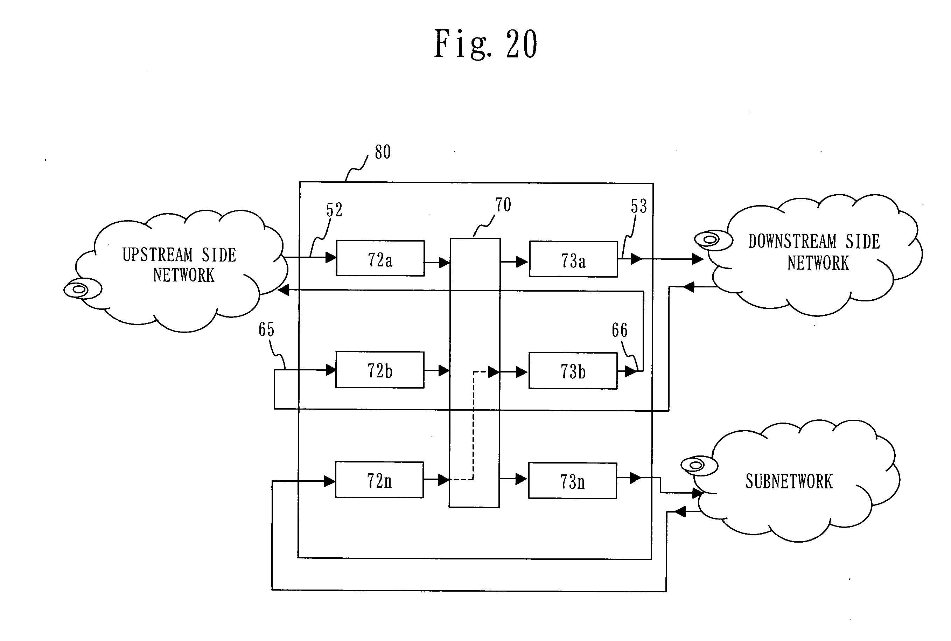

Next, operations will be explained with reference to Fig. 20. Fig. 20 shows connection between the switch type LAN monitoring/controlling apparatus 80 and the network.
(1) The switch type LAN monitoring/controlling apparatus 80 is connected to the upstream side network by the downstream packet input 52 and the upstream packet output 66, and connected to the downstream side network by the upstream packet input 65 and the downstream packet output 53. By dint of this connection, it relays packets between the upstream side network and the downstream side network like the LAN monitoring/controlling apparatus 1.
(2) In addition, the switch type LAN monitoring/controlling apparatus 80 connects a plurality of input packet processing parts 72c, 72d, ... 72n, etc. other than the input packet processing parts 72a and 72b and a plurality of output packet processing parts 73c, 73bd, ... 73n, etc. other than the output packet processing parts 73a and 73b to a plurality of subnetworks, and the packet switch part 70 switches the connection between processing parts to distribute a packet, as a switch.
(3) For example, when a packet received from the subnetwork through the input packet processing part 72n is classified into a transparent packet and its destination IP address is the upstream side network, the packet is sent to the output packet processing part 73b via the packet switch part 70 and output to the upstream packet output 66. Thus, it is relayed to the upstream side network. When the destination IP address is the downstream side network, the packet is sent to the output packet processing part 73a via the packet switch part 70 and output to the downstream packet output 53. Thus, the packet is relayed to the downstream side network.

Management communication will be explained.
(1) Management packets are received by a plurality of input packet processing parts 72a, 72b, ... 72n etc., classified into management packets and authenticated as management packets based on the management packet classification condition and the authentication condition being independent depending upon each network of the connection destination, and wholly transmitted to the management control part integration input 78 via the packet switch part 70.
(2) While performing processing of the received management packet, the management control part 45, according to need, outputs a transmission packet for returning, distributing, etc. to the management control part integrated output 79, and transmits it to the output packet processing parts 73a, 73b, ... 73n etc. connected to the network of the transmission destination via the packet switch part 70. The output packet processing parts 73a, 73b, 73n, etc. which received the packet adds authentication data and a header corresponding to the transmission destination, and transmits it to the downstream packet output 53, the upstream packet output 66, etc., giving the first priority to it.

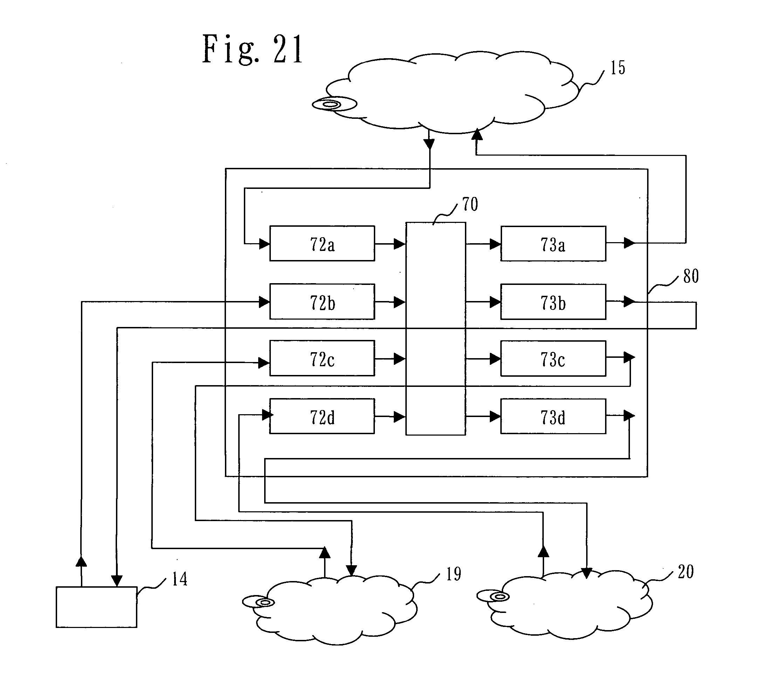

Fig. 21 shows a connection state of the switch type LAN monitoring/controlling apparatus 80 shown in Fig. 19. The output of the subnetwork 15 is connected to the input packet processing part 72a and the output is connected to the output packet processing part 73a. Moreover, the output of the management apparatus 14 is connected to the output packet processing part 73b as well as connected to the input packet processing part 72b. The output of the subnetwork 19 is connected to the output packet processing part 73c as well as connected to the input packet processing part 72c. The output of the subnetwork 20 is connected to the output packet processing part 73d as well as connected to the input packet processing part 72d. When a packet is output from each of the input packet processing parts 72a, 72b, 72c, and 72b, the packet switch part 70 switches the connection and sends the outputted packet to one of the output packet processing parts 73a, 73b, 73c, and 73d.

Since the switch type LAN monitoring/controlling apparatus 80 is configured as mentioned above, it is possible to be directly connected to a plurality of subnetworks, and to achieve detailed monitoring and controlling by a smaller number of apparatuses.

In the above Embodiment, has been explained the LAN monitoring/controlling method in which communication between normal subnetworks can be secured, while blocking packets from the network where a fault is occurring, by spreadly arranging and performing mutual communications among the LAN monitoring and controlling apparatus including the following (a) to (f), in the LAN.
(a) The packet classification part 39 to classify received packets into a transparent packet, a discard packet, an authentication packet, a management packet, or a monitor packet based on a combination of a plurality of fields in a packet header
(b) A count part (counter) to accumulate the number of classified packets
(c) A packet authentication part to verify the validity of a packet by authenticating an authentication packet and a management packet
(d) A transmission packet authentication processing part to add authentication data to a transmission packet
(e) An authentication packet generation part to attach a packet header used for classifying an authentication packet or a management packet, to a transmission packet
(f) A transmission priority control part to transmit a management packet giving the first priority, an authentication packet giving the second priority, and a transparent packet giving the third priority

In the above Embodiment, the case of operating the LAN monitoring/controlling apparatus as a repeater has been explained.

In the above Embodiment, the case where the LAN monitoring/controlling apparatuses mutually connected through the LAN share the management packet classification condition, the authentication packet classification condition, and the authentication condition of these packets has been explained. Moreover, as sharing methods, the following two have been explained.
(1) To have an individual classification condition and an individual authentication condition for each connection destination.
(2) Regarding a plurality of the LAN monitoring/controlling apparatuses directly connected through the LAN as a group, to share the same classification condition and authentication condition. When the LAN monitoring/controlling apparatuses have been arranged hierarchically, a common classification condition and a common authentication condition are shared in each layer.

In the above Embodiment, the case has been explained where when a received management packet or a received authentication packet is judged to be illegal as a result of authentication, the LAN monitoring/controlling apparatuses mutually performing management communication change the currently shared classification condition of a management packet or an authentication packet.

In the above Embodiment, has been explained the case where the LAN monitoring/controlling apparatuses mutually connected share a plurality of classification conditions for an authentication packet and a management packet, and when the LAN monitoring/controlling apparatus at the receiving side detects an authentication error, the classification condition to be used in subsequent communications is changed by the method that the LAN monitoring/controlling apparatus at the receiving side notifies a substitute classification condition to the LAN monitoring/controlling apparatus at the transmitting side. In addition, when a plurality of the LAN monitoring/controlling apparatuses share the same classification condition, the classification condition is changed in the whole group by the method that the LAN monitoring/controlling apparatus having detected the authentication error notifies a substitute classification condition to all the related LAN monitoring/controlling apparatuses.

In the above Embodiment, has been explained the case when a received packet is judged to be illegal by an authentication, if the times of judgment of being illegal, generated in a predetermined period of time, exceeds predetermined times, the classification condition of a management packet or an authentication packet is changed.

In the above Embodiment, among the LAN monitoring/controlling apparatuses receiving and sending management packets and authentication packets, the upper limit of the number of packets received and sent in a predetermined period of time is shared beforehand. Then, when the number of received management packets and received authentication packets exceeds the upper limit at the receiving side LAN monitoring/controlling apparatus, the classification condition of the corresponding management packet or authentication packet is changed.

In the above Embodiment, the LAN monitoring/controlling apparatuses are arranged hierarchically along the layered structure of the LAN.

In the above Embodiment, has been explained the case when transmitting management data (management packet) to all the LAN monitoring/controlling apparatuses from the management apparatus, the LAN monitoring/controlling apparatus which directly received a management instruction from the management apparatus is regarded as a starting point. Then, the management data is transmitted from the starting point to all the LAN monitoring/controlling apparatuses which are arranged adjoiningly as transmission destinations. Moreover, the LAN monitoring/controlling apparatus which received the management data also distributes the management data to all the LAN monitoring/controlling apparatuses arranged adjoiningly as transmission destinations. The above distribution processing is repeated until it reaches the end LAN monitoring/controlling apparatus.

In the above Embodiment, has been explained the case when sending back management data (management packet) to the management apparatus from the LAN monitoring/controlling apparatus, management data from the LAN monitoring/controlling apparatus arranged at the end is accumulated in the LAN monitoring/controlling apparatus arranged in the middle. Then, regarding the accumulated management data to be one management packet, it is sent back to the upper LAN monitoring/controlling apparatus.

In the above Embodiment, has been explained the case when it is found the LAN monitoring/controlling apparatus arranged in the middle accords with the predetermined blocking condition, based on a result of accumulating management data sent from the end and its own management data, an alarm is emitted to the management apparatus while all the LAN monitoring/controlling apparatuses arranged downstream of the LAN monitoring/controlling apparatus concerned are instructed to classify all the received packets except for a management packet and an authentication packet into discard packets.

In the above Embodiment, has been explained the case where management data (management packet) to be sent back from each LAN monitoring/controlling apparatus includes route data of the LAN monitoring/controlling apparatus which distributed the management data, and the management apparatus exactly understands the number and the connection relation of the LAN monitoring/controlling apparatuses spreadly arranged.

In the above Embodiment, has been explained the case when transmitting management data to a specific LAN monitoring/controlling apparatus from the management apparatus, it is possible for each LAN monitoring/controlling apparatus to deliver a management packet to a target LAN monitoring/controlling apparatus by including route data up to the destination in the management packet, based on the route data obtained by the procedure stated above. Furthermore, by transmitting a management packet including route data up to a specific LAN monitoring/controlling apparatus and an instruction to distribute management data to all the apparatuses, it is possible to distribute management data to all the LAN monitoring/controlling apparatuses connected downstream of the specific LAN monitoring/controlling apparatus. This is effective when blocking instructions are issued at a stretch to a specific LAN monitoring/controlling apparatus and to all the apparatuses downstream of the specific LAN monitoring/controlling apparatus.

In the above Embodiment, has been explained the case when transferring a return packet addressed to the management apparatus from each LAN monitoring/controlling apparatus, each LAN monitoring/controlling apparatus stores the transfer relation, and when receiving a packet addressed to a specific LAN monitoring/controlling apparatus transmitted from the management apparatus, the packet is transferred by automatically judging the LAN monitoring/controlling apparatus being the transmission destination. In addition, stored data is updated each time the management apparatus transfers a management packet to all the LAN monitoring/controlling apparatuses. This aims to dynamically react to extension of the apparatus or a connection position change of the management apparatus.

In the above Embodiment, has been explained the case where a normal packet is transmitted through a subnetwork which is currently blocked, by changing a packet received from a normal subnetwork side into an authentication packet between the LAN monitoring/controlling apparatuses mutually connected through the subnetwork currently blocked because of a fault.

In the above Embodiment, has been explained the case when extending a LAN monitoring/controlling apparatus, data required for monitoring and controlling can be acquired by performing management communication between the LAN monitoring/controlling apparatus and an existing adjoining LAN monitoring/controlling apparatus. The management communication between the existing apparatus being a connection destination and the apparatus to be extended can be performed by either of the following:
(1) Directly setting data required for classification and authentication, in the existing apparatus.
(2) Transmitting data required for classification and authentication, to the apparatus being the connection destination beforehand from the management apparatus.

In the above Embodiment, has been explained the case where the LAN monitoring/controlling apparatus being the first connection destination distributes connection data on an apparatus to which an extended apparatus can be further connected, to the extended apparatus, while distributing connection data on the extended apparatus to the connectable apparatus. It is possible to autonomously expand the connection range within the scope where management communication can be directly performed through the LAN.

### Brief Description of the Drawings

Fig. 1 shows a network configuration of a network system 1000 described in Embodiment 1;
Fig. 2 is a block diagram of a LAN monitoring/controlling apparatus 1 described in Embodiment 1;
Fig. 3 shows connection between the LAN monitoring/controlling apparatus 1 and the LAN monitoring/controlling apparatus 3 described in Embodiment 1;
Fig. 4 is a flowchart of a process of transmitting a management packet from the LAN monitoring/controlling apparatus 1 from the LAN monitoring/controlling apparatus 3 described in Embodiment 1;
Fig. 5 is a flowchart when an authentication error of a management packet occurs described in Embodiment 1;
Fig. 6 is a flowchart showing operations of the management apparatus 14 collecting monitoring data of all the LAN monitoring/controlling apparatuses 1 to 13 described in Embodiment 1;
Fig. 7 is a flowchart showing blocking of a subnetwork 26 described in Embodiment 1;
Fig. 8 is a flowchart explaining the case of a partial restoration and a complete restoration of the blocking described in Embodiment 1;
Fig. 9 shows a relaying direction of a transparent packet described in Embodiment 1;
Fig. 10 shows blocking of a transparent packet in the downstream direction described in Embodiment 1;
Fig. 11 is a flowchart showing extension procedures of the LAN monitoring/controlling apparatuses 1 to 13 described in Embodiment 1;
Fig. 12 shows a connection relation between the LAN monitoring/controlling apparatus and the network described in Embodiment 2;
Fig. 13 is a block diagram of the LAN monitoring/controlling apparatuses 1 and 3 described in Embodiment 2;
Fig. 14 is a flowchart showing sending/receiving of an authentication packet described in Embodiment 2;
Fig. 15 is a flowchart showing a usual relay operation described in Embodiment 3;
Fig. 16 is a flowchart showing an operation when the LAN monitoring/controlling apparatus 1 receives a management packet described in Embodiment 3;
Fig. 17 is a flowchart showing a process of transmitting a management packet by the LAN monitoring/controlling apparatus 1 described in Embodiment 3;
Fig. 18 is a block diagram of a switch type LAN monitoring/controlling apparatus 80 described in Embodiment 4;
Fig. 19 shows an example of a network configuration using the switch type LAN monitoring/controlling apparatus 80 described in Embodiment 4;
Fig. 20 shows a connection between the switch type LAN monitoring/controlling apparatus 80 and the network described in Embodiment 4; and
Fig. 21 shows a connection state of the switch type LAN monitoring/controlling apparatus 80 described in Embodiment 4.

### Description of the Reference Numerals

1 to 13 LAN monitoring/controlling apparatus, 14 management apparatus, 15 to 18 LAN network, 19 to 26 subnetwork, 27 external network interface, 28 fault subnetwork, 29 fault terminal, 30 illegal packet input, 31 downstream input, 32 upstream output, 33 downstream output, 34 upstream input, 35 downstream input, 36 upstream output, 37 downstream output, 38 upstream input, 39 packet classification part, 40 transparent packet output, 41 discard packet output, 42 authentication packet output, 43 monitor packet output, 44 packet authentication part, 45 management control part, 46 output packet sorting part, 47 transparent packet output, 48 authentication packet output, 49 transmission packet authentication processing part, 50 authentication packet generation part, 51 transmission priority control part, 52 downstream packet input, 53 downstream packet output, 54 illegal packet output, 55 authenticated packet output, 56 management control part downstream input, 57 management control part downstream output, 58 discard packet counter, 59 monitor packet counter, 60 transparent packet counter, 61 illegal packet counter, 62 authenticated packet counter, 63 downstream packet processing part, 64 upstream packet processing part, 65 upstream packet input, 66 upstream packet output, 67 management control part upstream input, 68 management control part upstream output, 69 packet input switch interface part, 70 packet switch part, 71 packet output switch interface part, 72a input packet processing part, 73 a output packet processing part, 72b input packet processing part, 73b output packet processing part, 72n input packet processing part, 73n output packet processing part, 78 management control part integration input, 79 management control part integrated output, 80 switch type LAN monitoring/controlling apparatus, 81 switch type LAN monitoring/controlling apparatus, 82 switch type LAN monitoring/controlling apparatus, 85 management packet counter, 86, 87, 88, 89, 90, 91, 92, 93, 94, 95 transparent packet, 1000 network system.

## Claims

1. A network system comprising:
a plurality of relaying apparatuses to relay communication among constructive networks which configure an aggregated network composed of a plurality of networks,
wherein each of the plurality of relaying apparatuses, when receiving a packet communicated in the aggregated network through a constructive network to which a relaying apparatus itself is connected, classifies the packet into at least one of a decoding packet whose content is to be decoded and a transparent packet which is to penetrate inside its own apparatus.

2. The network system according to claim 1,
further comprising a management apparatus, arranged in the aggregated network, to transmit a control packet including designation data for designating at least one of the plurality of relaying apparatuses and control data for instructing a designated relaying apparatus designated by the designation data on a predetermined control, to its adjoining relaying apparatus,
wherein, in the plurality of relaying apparatuses, each of relaying apparatuses from a relaying apparatus to receive the control packet sent by the management apparatus to a relaying apparatus adjacent to the designated relaying apparatus, when receiving the control packet, classifies the control packet received into the decoding packet, and distributes the control packet to the designated relaying apparatus based on a decoding result of the control packet which has been classified into the decoding packet.

3. The network system according to claim 2,
wherein the management apparatus designates the plurality of relaying apparatuses to be designated relaying apparatuses as designation data, and includes a data request in the control packet, which requests predetermined data from the plurality of designated relaying apparatuses as control data,
each of the plurality of designated relaying apparatuses, when receiving the control packet including the data request, classifies the control packet received into a decoding packet, and transmits a response packet including correspondence data corresponding to the data request, to other relaying apparatus, based on a decoding result of the control packet which has been classified into the decoding packet, and
the other relaying apparatus, when receiving the response packet from each of the plurality of designated relaying apparatuses, generates an integrated packet integrating each response packet, and transmits the integrated packet generated to the management apparatus.

4. The network system according to claim 3,
wherein the other relaying apparatus, when receiving the response packet from the designated relaying apparatus, generates the integrated packet including route data indicating a route from the designated relaying apparatus to the other relaying apparatus itself.

5. The network system according to claim 3,
wherein the other relaying apparatus, when receiving the response packet from the designated relaying apparatus, stores route data indicating a route from the designated relaying apparatus to the other relaying apparatus itself.

6. The network system according to claim 1,
wherein each of the relaying apparatuses stores predetermined management data, and when a relaying apparatus is newly installed in the constructive network to which the relaying apparatus itself is connected, supplies the predetermined management data to an installed relaying apparatus.

7. A relaying apparatus which relays a packet from a first network to a second network, comprising:
a packet classification part to receive the packet from the first network, and to classify a received packet into at least one of a management packet used for managing communication and a transparent packet which penetrates inside its own apparatus;
a transmission part to transmit the transparent packet classified by the packet classification part to the second network; and
a management control part to input the management packet classified by the packet classification part, and to decode the management packet.

8. The relaying apparatus according to claim 7,
wherein the packet classification part receives the packet of a format predetermined from the first network, as the received packet, and
the transmission part, when the packet classification part classifies the received packet into the transparent packet, transmits the transparent packet to the second network without changing the format of the transparent packet being the received packet.

9. The relaying apparatus according to claim 7,
wherein the packet classification part classifies a predetermined packet received from the first network into a monitor packet being a monitoring object, and
the relaying apparatus further includes a monitor packet counter to measure a number of monitor packets classified by the packet classification part.

10. The relaying apparatus according to claim 9,
wherein the management control part analyses the monitor packets classified by the packet classification part.

11. The relaying apparatus according to claim 7,
further including a transparent packet counter to measure a number of transparent packets classified by the packet classification part,
wherein the packet classification part changes classification of the received packet, from the transparent packet to a discard object packet being a discarding object, based on the number of measurement of the transparent packet counter.

12. The relaying apparatus.according to claim 7,
wherein the packet classification part, when receiving a discard instruction packet including a discard instruction to instruct to discard a packet, from the first network, classifies a received discard instruction packet into the management packet, and
the management control part makes the packet classification part change classification of the received packet, from the transparent packet to a discard object packet being a discarding object, based on the discard instruction included in the discard instruction packet which has been classified into the management packet.

13. The relaying apparatus according to claim 7,
wherein the packet classification part, when receiving an authentication data added packet, to which authentication data is added, from the first network, classifies a received authentication data added packet into the management packet, and
the relaying apparatus further comprises a packet authentication part to perform authenticating the authentication data added packet which is classified into the management packet by the packet classification part, and when the authenticating is approved, to output an approved authentication data added packet to the management control part.

14. The relaying apparatus according to claim 7,
wherein the management control part generates a transmission packet for management communication which includes predetermined management data based on a decoding result of the management packet, and outputs a generated transmission packet for management communication, and
the transmission part inputs the transmission packet for management communication outputted by the management control part, and transmits an inputted transmission packet for management communication to the second network, giving it higher priority over the transparent packet.

15. The relaying apparatus according to claim 14,
further including a header adding part to input the transmission packet for management communication outputted by the management control part, to add a header including indication data indicating being the transmission packet for management communication to an inputted transmission packet for management communication, and to output it as a header added packet,
wherein the transmission part inputs the header added packet outputted by the header adding part, and transmits an inputted header added packet to the second network, giving it higher priority over the transparent packet.

16. The relaying apparatus according to claim 15,
further including an authentication data adding part to input the transmission packet for management communication outputted by the management control part, to add authentication data to an inputted transmission packet for management communication, and to output it as an authentication data added packet,
wherein the header adding part inputs the authentication data added packet outputted by the authentication data adding part, adds the header including the indication data indicating being the transmission packet for management communication to an inputted authentication data added packet, and outputs it as the header added packet.

17. The relaying apparatus according to claim 7,
wherein the management control part stores a management packet classification condition by which the packet classification part classifies the received packet into the management packet, and notifies a stored management packet classification condition to the packet classification part, and
the packet classification part classifies the received packet into the management packet based on the management packet classification condition notified by the management control part.

18. The relaying apparatus according to claim 17,
wherein the management control part, in a predetermined case, renotifies a predetermined management packet classification condition to the packet classification part, and
the packet classification part, classifies the received packet into the management packet based on the management packet classification condition renotified by the management control part.

19. The relaying apparatus according to claim 18,
further including a management packet counter to measure a number of management packets classified by the packet classification part,
wherein the management control part renotifies the predetermined management packet classification condition to the packet classification part, based on the number of measurement of the management packets measured by the management packet counter.

20. The relaying apparatus according to claim 18,
wherein the packet classification part, when receiving an authentication data added packet to which authentication data is added from the first network, classifies a received authentication data added packet into the management packet,
the relaying apparatus further includes a packet authentication part to authenticate the authentication data added packet which the packet classification part classified into the management packet, and
the management control part renotifies the predetermined management packet classification condition to the packet classification part, based on an authentication result of the management packet by the packet authentication part.

21. A relaying apparatus which relays a packet from a first network to a second network, comprising:
a packet classification part to classify a predetermined packet received from the first network into an object packet being an object to add authentication data when malfunction is occurring in the second network;
an authentication data adding part to add the authentication data to the object packet classified by the packet classification part; and
a transmission part to transmit the object packet to which the authentication data adding part added the authentication data, to the second network.

22. A relaying apparatus which relays a packet from a first network to a second network, comprising:
a packet classification part, when receiving an authentication data added packet to which authentication data has been added from the first network where malfunction is occurring, to classify a received authentication data added packet into an authentication packet;
a packet authentication part to input and authenticate the authentication packet which the packet classification part classified, and when authentication is approved, to output an approved authentication packet; and
a transmission part to input the authentication packet outputted by the packet authentication part, and to output it to the second network.

23. The relaying apparatus according to claim 22,
further comprising a management control part to store a plurality of authentication packet classification conditions for classifying the authentication data added packet received by the packet classification part into the authentication packet, and to notify one of the plurality of authentication packet classification conditions which are stored, to the packet classification part,
wherein the packet classification part classifies the received authentication data added packet into the authentication packet based on an authentication packet classification condition notified by the management control part.

24. The relaying apparatus according to claim 23,
wherein the management control part, in a predetermined case, renotifies a predetermined authentication packet classification condition to the packet classification part, and
the packet classification part classifies a received packet into the authentication packet, based on the authentication packet classification condition renotified by the management control part.

25. The relaying apparatus according to claim 24,
wherein the management control part renotifies the predetermined authentication packet classification condition to the packet classification part, based on an authentication result of the authentication packet by the packet authentication part.

26. The relaying apparatus according to claim 24,
further including an authentication packet counter to measure a number of authentication packets classified by the packet classification part,
wherein the management control part renotifies the predetermined authentication packet classification condition to the packet classification part, based on the number of measurement of the authentication packets measured by the authentication packet counter.
